(19) **Europäisches Patentamt**
**European Patent Office**
**Office européen des brevets**

(11) **EP 4 506 721 A1**

(12) **EUROPEAN PATENT APPLICATION**
published in accordance with Art. 153(4) EPC

(43) Date of publication:
**12.02.2025 Bulletin 2025/07**

(21) Application number: **23769449.2**

(22) Date of filing: **20.01.2023**

(51) International Patent Classification (IPC):
**G01S 7/481** (2006.01)    **G01S 17/10** (2020.01)

(52) Cooperative Patent Classification (CPC):
**G01S 7/481; G01S 7/483; G01S 7/495;**
**G01S 17/10; G01S 17/93**

(86) International application number:
**PCT/CN2023/073370**

(87) International publication number:
**WO 2023/173938 (21.09.2023 Gazette 2023/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.03.2022 CN 202210244895**

(71) Applicant: **Hesai Technology Co., Ltd.**
**Shanghai 201821 (CN)**

(72) Inventors:
• **SHI, Congbo**
**Shanghai 201821 (CN)**
• **XIANG, Shaoqing**
**Shanghai 201821 (CN)**

(74) Representative: **Fish & Richardson P.C.**
**Highlight Business Towers**
**Mies-van-der-Rohe-Straße 8**
**80807 München (DE)**

(54) **LASER RADAR CONTROL METHOD, COMPUTER STORAGE MEDIUM, AND LASER RADAR**

(57) This disclosure discloses a control method for a LiDAR, including the following steps. At S11, light-emitting time sequences of lasers of one group of channels are determined, where a first light-emitting time sequence used in a first detection orientation is different from a second light-emitting time sequence used in a second detection orientation. At S12, the lasers of the group of channels are controlled to emit a first group of detection pulses based on the first light-emitting time sequence in the first detection orientation. At S13, a first group of echo pulses reflected from an object by the first group of detection pulses are respectively received through detectors of the group of channels. At S14, the lasers of the group of channels are controlled to emit a second group of detection pulses based on the second light-emitting time sequence in the second detection orientation. At S15, a second group of echo pulses reflected from the object by the second group of detection pulses are respectively received through the detectors of the group of channels. At S16, for one channel in the group of channels, an effective echo pulse of the one channel is determined based on the first group of echo pulses and the second group of echo pulses of the one channel. In this disclosure, crosstalk among parallel light-emitting channels can be reduced, signal-to-noise ratio and ranging accuracy can be improved.

Fig. 3a

**Description**

## TECHNICAL FIELD

This disclosure relates to the field of photoelectric detection technology, and in particular, to a control method for a LiDAR, a computer storage medium and a LiDAR.

## BACKGROUND

As a three-dimensional measurement system, a LiDAR can realize three-dimensional measurement coverage of a measurement area through determined point cloud. A multi-channel LiDAR based on Time of Flight ("ToF") can include multiple transmitting and receiving channels, which is suitable for when a large field of view needs to be scanned and high-density point cloud needs to be determined.

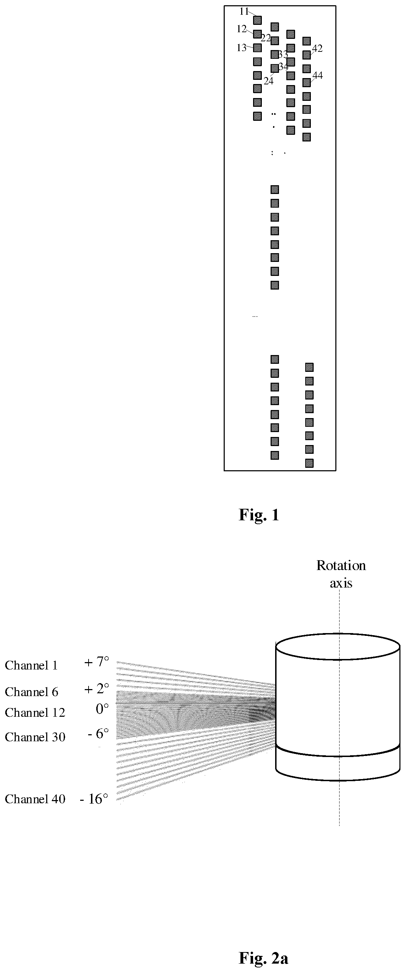

128 lasers shown in Fig. 1 are arranged in 32 rows and 4 columns. Among them, laser 11 represents a laser located at column 1, row 1, laser 12 represents a laser located at column 1, row 2, and laser 41 represents a laser located at column 4, row 1. If it is beneficial to improve a resolution or frequency of the point cloud, it can be made by increasing the number of parallel light-emitting channels. For example, the number of parallel light-emitting of a particular LiDAR is eight. Still with reference to Fig. 1, lasers 11, 13, 22, 24, 33, 34, 44, and 42 are selected as one group of lasers to emit light in parallel and detect in parallel. In such a case, channels for parallel detection are channel 1 to channel 8, eight points with an upper ranging limit of 200 m can be determined within 1.333 us. 128 lasers are divided into 16 groups, and each group of lasers emits the light in parallel and detects in parallel. By doing so, compared with the LiDAR with merely one laser emitting the light at the same time, the resolution of the point cloud can be increased by a factor of eight.

Fig. 2a shows a schematic diagram of a vertical field of view of a LiDAR, which is a sectional view of the LIDAR in a vertical direction. The vertical field of view represents an angle range that the LiDAR can detect in the vertical direction. Detection beams emitted by multiple lasers arranged vertically correspond to a channel 1, a channel 2, ..., and a channel 40, respectively. The vertical field of view is 23 degrees (from -16 degrees downward to 7 degrees upward). In a point cloud image output by the LiDAR, an included angle between two adjacent points on a vertical plane parallel to a rotation axis is a vertical angular resolution. To make better use of laser for detection, the detection beams are concentrated in a middle area of interest. Therefore, the detection beams are not distributed vertically and evenly, but dense in a middle and sparse at both sides.

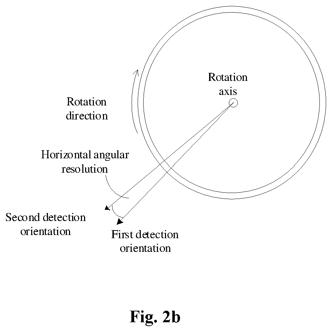

Fig. 2b shows a schematic diagram of a horizontal field of view of a LiDAR, which is a sectional view of the LiDAR in a horizontal direction. The horizontal field of view represents an angle range that the LiDAR can detect in the horizontal direction. For example, if a mechanical LiDAR rotates 360 degrees in one turn, the horizontal field of view is 360 degrees. In a point cloud image output by the LiDAR, an included angle between two adjacent points on a horizontal plane perpendicular to a rotation axis (perpendicular to a paper surface) is a horizontal angular resolution, for example, the horizontal angular resolution is 0.2 degrees.

Measurement of parallel light emission of multiple channels introduces optical crosstalk and electrical crosstalk issues.

The optical crosstalk includes interference caused by the parallel light emission of adjacent channels of the LiDAR. Still with reference to Fig. 1, when multiple channels of the LiDAR emits the light in parallel, a detector of each channel can receive reflected light on a target object from detection pulses emitted by other channels. Intensity of the reflected light increases with decrease of distance, and the higher reflectivity of the target, the higher the intensity of the reflected light. When the intensity of the reflected light caused by other channels reaches a particular level, an interfering pulse waveform can be generated on a waveform received by the detector of the channel (which can be superimposed with an echo pulse caused by a real obstacle, and a real echo pulse is a basis for subsequent calculation of the distance and the reflectivity, and therefore the calculation of the distance and the reflectivity can be interfered, resulting in an inaccurate result). The optical crosstalk is a main factor affecting ranging accuracy, which mostly occurs in a scene of a high-reflection plate nearby.

The electrical crosstalk includes a pulse waveform generating interference in which the crosstalk of a signal from a channel with a strong electrical signal directly goes to the other receiving channels through a circuit when the multiple channels of the LiDAR receive electrical signals at the same time.

To sum up, signal crosstalk is prone to occur among the multiple channels, resulting in an inaccurate detection result. It is a problem faced by a multi-channel LiDAR to eliminate or reduce influence of mutual crosstalk between channels and improve detection accuracy.

The content of the background merely discloses technologies known by inventors, and does not necessarily represent the existing technique in this field.

## SUMMARY

In view of existing one or more disadvantages, this disclosure relates to a control method for a LiDAR, which makes crosstalk random by changing relative time sequences of parallel light-emitting channels before and after light emission within a particular time range, and selects an echo pulse with a stable position in multiple detection orientations as a real echo signal reflected by an object in a detected direction by combining with filtering of echoes in multiple angles, to reduce the crosstalk between the parallel light-emitting channels and improve signal-to-noise ratio and ranging accuracy. Specifically, the LiDAR includes multiple channels, where each channel includes at least one laser and at least one detector, and the control method includes:

S11: dividing the multiple channels into multiple groups, with all channels in each group emitting light in parallel, and determine, for one group of channels, light-emitting time sequences of lasers of the group of channels, where a first light-emitting time sequence used in a first detection orientation is different from a second light-emitting time sequence used in a second detection orientation;

S12: controlling the lasers of the group of channels to emit a first group of detection pulses based on the first light-emitting time sequence in the first detection orientation;

S13: respectively receiving a first group of echo pulses reflected from an object by the first group of detection pulses through detectors of the group of channels;

S14: controlling the lasers of the group of channels to emit a second group of detection pulses based on the second light-emitting time sequence in the second detection orientation;

S15: respectively receiving a second group of echo pulses reflected from the object by the second group of detection pulses through the detectors of the group of channels; and

S16: determining, for one channel in the group of channels, an effective echo pulse of the one channel based on the first group of echo pulses and the second group of echo pulses of the one channel.

Based on a preferred embodiment of this disclosure, at least part of the lasers of the group of channels emit light at different times in the first light-emitting time sequence and the second light-emitting time sequence.

Based on a preferred embodiment of this disclosure, at the step S13 and the S15, an echo pulse received through a detector of each channel in the group of channels includes the effective echo pulse and crosstalk generated by other channels, and the step S16 includes: determining an echo pulse of the one channel that coincides with each other in the first detection orientation and the second detection orientation based on time matching degree.

Based on a preferred embodiment of this disclosure, at the step S12 and step S14, at least one of pulses emitted by the lasers of the group of channels is used as a ranging pulse, and the step S16 includes: relatively shifting, for one channel in the group of channels, emitting time of the ranging pulse of the one channel in the first detection orientation and the second detection orientation to coincide with each other, and compare two ranging results to select an echo pulse with a stable position.

Based on a preferred embodiment of this disclosure, at the step S13 and step S15, ranging echo pulses reflected from the object by ranging pulse are respectively received through the detectors of the group of channels, and the step S16 includes: relatively shifting, for one channel in the group of channels, the emitting time of the ranging pulse of the one channel in the first detection orientation and the second detection orientation to coincide with each other, where the ranging echo pulse that is staggered in time is the echo pulse with the stable position.

Based on a preferred embodiment of this disclosure, the step S11 further includes: determining light-emitting time sequences of the lasers of the group of channels in at least one other detection orientation after the second detection orientation, where a light-emitting time sequence in the at least one other detection orientation is different from the first light-emitting time sequence and the second light-emitting time sequence, and the step S16 includes: determining, for one channel in the group of channels, the echo pulses with the stable positions of the one channel in the first detection orientation, the second detection orientation, and the at least one other detection orientation as the effective echo pulses of the one channel in at least one of the first detection orientation or the second detection orientation.

Based on a preferred embodiment of this disclosure, a time difference between the first detection orientation and the second detection orientation and the at least one other detection orientation is within a predetermined time range.

Based on a preferred embodiment of this disclosure, the step S16 further includes: determining the echo pulses with the stable positions of the one channel in the first detection orientation and the second detection orientation based on the echo pulses of at least one second channel in the first detection orientation and the second detection orientation.

Based on a preferred embodiment of this disclosure, the step S16 includes: taking the echo pulses with the stable positions as the effective echo pulses of the one channel in at least one of the first detection orientation or the second detection orientation when a difference value or a ratio of amplitudes of the echo pulses with the stable positions of the one channel in the first detection orientation and the second detection orientation exceeds a predetermined threshold.

Based on a preferred embodiment of this disclosure, the step S11 includes:

determining the first light-emitting time sequence and the second light-emitting time sequence in such a manner: determining the first light-emitting time sequence and the second light-emitting time sequence based on one or more of a previous ranging result of each channel in the group of channels, a previous ranging result of a channel adjacent to the channel, and obstacle information, where the first light-emitting time sequence and the second light-emitting time sequence are configured to cause the first group of echo pulses and the second group of echo pulses to be staggered in time.

Based on a preferred embodiment of this disclosure, the control method further includes: dividing a total time of flight window for the lasers of the group of channels into at least a first interval and a second interval, where the first light-emitting time sequence is configured to cause the first group of echo pulses to be distributed in the second interval in a non-overlapping manner, and the second light-emitting time sequence is configured to cause the second group of echo pulses and the first group of echo pulses to be distributed in the second interval in the non-overlapping manner.

Based on a preferred embodiment of this disclosure, the control method further includes: dividing the second interval into k sub-intervals, where k is an integer greater than or equal to the number of channels in the group, and where the first light-emitting time sequence is configured to cause the first group of echo pulses to be distributed in the k sub-intervals in the non-overlapping manner; and the second light-emitting time sequence is configured to cause the second group of echo pulses and the first group of echo pulses to be distributed in the k sub-intervals in the non-overlapping manner.

Based on a preferred embodiment of this disclosure, the length of each sub-interval is greater than the maximum pulse width of the echo pulse.

Based on a preferred embodiment of this disclosure, the first light-emitting time sequence is configured to cause the first group of echo pulses to be distributed in the k sub-intervals that are unoccupied and nearest; and the second light-emitting time sequence is configured to cause the second group of echo pulses to be distributed in the k sub-intervals that are unoccupied and nearest.

This disclosure further relates to a computer storage medium including computer executable instructions stored thereon, which, when executed by a processor, implements the control method based on any of claims 1 to 14.

This disclosure further relates to a LiDAR, including:

multiple lasers, where at least one pulse emitted by each laser is used as a ranging pulse;
multiple detectors, where the multiple lasers and the multiple detectors form multiple channels, and each channel includes at least one laser and at least one detector; and
a controller apparatus connected to the multiple lasers and the multiple detectors, where the controller apparatus is configured to:

divide the multiple channels into multiple groups, with all channels in each group emitting light in parallel, and determine, for one group of channels, light-emitting time sequences of lasers of the group of channels, where a first light-emitting time sequence used in a first detection orientation is different from a second light-emitting time sequence used in a second detection orientation;
control the lasers of the group of channels to emit a first group of detection pulses based on the first light-emitting time sequence in the first detection orientation;
respectively receive a first group of echo pulses reflected from an object by the first group of detection pulses through detectors of the group of channels;
control the lasers of the group of channels to emit a second group of detection pulses based on the second light-emitting time sequence in the second detection orientation;
respectively receive a second group of echo pulses reflected from the object by the second group of detection pulses through the detectors of the group of channels; and
determine, for one channel in the group of channels, an effective echo pulse of the one channel based on the first group of echo pulses and the second group of echo pulses of the one channel.

Based on a preferred embodiment of this disclosure, at least part of the lasers of the group of channels emit light at different times in the first light-emitting time sequence and the second light-emitting time sequence.

Based on a preferred embodiment of this disclosure, an echo pulse received through a detector of each channel in the group of channels includes the effective echo pulse and crosstalk generated by other channels, and the controller apparatus is configured to: determine an echo pulse of the one channel that coincides with each other in the first detection orientation and the second detection orientation based on time matching degree.

Based on a preferred embodiment of this disclosure, at least one of pulses emitted by the lasers of the group of channels is used as a ranging pulse, and the controller apparatus is configured to: relatively shift, for one channel in the group of channels, emitting time of the ranging pulse of the one channel in the first detection orientation and the second detection orientation to coincide with each other, and compare two ranging results to select an echo pulse with a stable position.

Based on a preferred embodiment of this disclosure, ranging echo pulses reflected from the object by ranging pulses are respectively received through the detectors of the group of channels, and the controller apparatus is configured to: relatively shift, for one channel in the group of channels, the emitting time of the ranging pulse of the one channel in the first detection orientation and the second detection orientation to coincide with each other, where the ranging echo pulse that is staggered in time is the echo pulse with the stable position.

Based on a preferred embodiment of this disclosure, the controller apparatus is configured to: determine light-emitting time sequences of the lasers of the group of channels in at least one other detection orientation after the second detection orientation, where a light-emitting time sequence in the at least one other detection orientation is different from the first light-emitting time sequence and the second light-emitting time sequence, and the controller apparatus is further configured to: determine, for one channel in the group of channels, the echo pulses with the stable positions of the one channel in the first detection orientation, the second detection orientation, and the at least one other detection orientation as the effective echo pulses of the one channel in at least one of the first detection orientation or the second detection orientation.

Based on a preferred embodiment of this disclosure, a time difference between the first detection orientation and the second detection orientation and the at least one other detection orientation is within a predetermined time range.

Based on a preferred embodiment of this disclosure, the controller apparatus is further configured to: determine the echo pulses with the stable positions of the one channel in the first detection orientation and the second detection orientation based on the echo pulses of at least one second channel in the first detection orientation and the second detection orientation.

Based on a preferred embodiment of this disclosure, the controller apparatus is further configured to: take the echo pulses with the stable positions as the effective echo pulses of the one channel in at least one of the first detection orientation or the second detection orientation when a difference value or a ratio of amplitudes of the echo pulses with the stable positions of the one channel in the first detection orientation and the second detection orientation exceeds a predetermined threshold.

Based on a preferred embodiment of this disclosure, the controller apparatus is further configured to: determine the first light-emitting time sequence and the second light-emitting time sequence in such a manner: determining the first light-emitting time sequence and the second light-emitting time sequence based on one or more of a previous ranging result of each channel in the group of channels, a previous ranging result of a channel adjacent to the channel, and obstacle information, where the first light-emitting time sequence and the second light-emitting time sequence are configured to cause the first group of echo pulses and the second group of echo pulses to be staggered in time.

Based on a preferred embodiment of this disclosure, the controller apparatus is further configured to: divide a total time of flight window for the lasers of the group of channels into at least a first interval and a second interval, where the first light-emitting time sequence is configured to cause the first group of echo pulses to be distributed in the second interval in a non-overlapping manner, and the second light-emitting time sequence is configured to cause the second group of echo pulses and the first group of echo pulses to be distributed in the second interval in the non-overlapping manner.

Based on a preferred embodiment of this disclosure, the controller apparatus is further configured to: divide the second interval into k sub-intervals, where k is an integer greater than or equal to the number of channels in the group, and where the first light-emitting time sequence is configured to cause the first group of echo pulses to be distributed in the k sub-intervals in the non-overlapping manner; and the second light-emitting time sequence is configured to cause the second group of echo pulses and the first group of echo pulses to be distributed in the k sub-intervals in the non-overlapping manner.

Based on a preferred embodiment of this disclosure, the length of each sub-interval is greater than the maximum pulse width of the echo pulse.

Based on a preferred embodiment of this disclosure, the controller apparatus is further configured to: configure the first light-emitting time sequence to cause the first group of echo pulses to be distributed in the k sub-intervals that are unoccupied and nearest; and configure the second light-emitting time sequence to cause the second group of echo pulses to be distributed in the k sub-intervals that are unoccupied and nearest.

In solutions of this disclosure, the first light-emitting time sequence used by the LiDAR in the first detection orientation is different from the second light-emitting time sequence used in the second detection orientation, to cause crosstalk to be random, which facilitates selecting of the real echo pulse with the stable position, thereby improving detection accuracy and reducing noise points.

## BRIEF DESCRIPTION OF THE DRAWINGS

Drawings, which constitute a part of this disclosure, are intended to provide further understanding of this disclosure, and illustrative embodiments of this disclosure and description thereof are configured to explain this disclosure, but do not constitute undue limitations on this disclosure. In the drawings:

Fig. 1 shows a schematic diagram of arrangement of lasers in an existing multi-channel LiDAR.

Fig. 2a shows a schematic diagram of a vertical field of view of a LiDAR.

Fig. 2b shows a schematic diagram of a horizontal field of view of a LiDAR.

FIG. 3a shows a flowchart of a control method for a LiDAR, provided in an embodiment of this disclosure.

Fig. 3b shows a schematic structural and detection diagram of a LiDAR, provided in an embodiment of this disclosure.

Fig. 4 shows a comparison diagram of light-emitting time sequences in a first detection orientation and a second detection orientation, provided in an embodiment of this disclosure.

Fig. 5a shows a schematic diagram of emission and reception in the first detection orientation and the second detection orientation, provided in an embodiment of this disclosure.

Fig. 5b shows a schematic diagram of sliding window process for a channel 1 in Fig. 5a.

Fig. 5c shows a schematic diagram of detection and sliding window modes in two detection orientations in Fig. 5a.

Fig. 6a shows a schematic diagram of a first sliding window range, provided in an embodiment of this disclosure.

Fig. 6b shows a schematic diagram of a second sliding window range, provided in an embodiment of this disclosure.

Fig. 6c shows a schematic diagram of a third sliding window range, provided in an embodiment of this disclosure.

Fig. 6d shows a schematic diagram of a fourth sliding window range, provided in an embodiment of this disclosure.

Fig. 7 shows a comparison diagram of ranging results in a first detection orientation and a second detection orientation, provided in an embodiment of this disclosure.

Fig. 8 shows a schematic diagram of light-emitting coding settings of three pulses.

Fig. 9 shows a schematic diagram of emission and reception when two channels emit three pulses in parallel without crosstalk.

Fig. 10 shows a schematic diagram of a case where crosstalk occurs between two channels.

Fig. 11a shows a schematic diagram of a multi-pulse time interval.

Fig. 11b shows a schematic diagram of a total time of flight window when emitting dual pulses.

Fig. 12a shows a schematic diagram of division of a total time of flight window, provided in an embodiment of this disclosure.

Fig. 12b shows a schematic diagram of division of a total time of flight window, provided in another embodiment of this disclosure.

Fig. 13 shows a schematic diagram of a first light-emitting time sequence and a ranging result at an angle of $\theta_i$, provided in an embodiment of this disclosure.

Fig. 14 shows a schematic diagram of a LiDAR, provided in an embodiment of this disclosure.

## DETAILED DESCRIPTION

In the following, merely some exemplary embodiments are briefly described. As can be understood by those skilled in the art, described embodiments can be modified in various ways without departing from the spirit or scope of this disclosure. Accordingly, drawings and description are considered to be exemplary rather than restrictive in nature.

In the description of this disclosure, it should be understood that an orientation or positional relationship indicated by terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," is based on the orientation or positional relationship shown in drawings, and are merely for convenience of describing this disclosure and simplifying the description, rather than indicate or imply that an apparatus or an element referred to must have a specific orientation, be configured and operated in a specific orientation, and therefore cannot be understood as a limitation on this disclosure. In addition, terms "first" and "second" are merely for descriptive purposes and cannot be understood as indicating or implying relative importance, or implicitly indicating the number of indicated technical features. Therefore, features limited with "first" and "second" can explicitly or implicitly include one or more features. In the description of this disclosure, "multiple" means two or more, unless otherwise specifically limited.

In the description of this disclosure, it should also be noted that unless otherwise specified and limited, terms "installing," "coupling," and "connecting" should be understood in a broad sense. For example, it can be fixedly connecting, detachably connecting, or integrally connecting; it can be mechanically connecting or electrically connecting, or can be communicated with each; and it can be directly connecting or indirectly connecting through an intermediate medium, or it can be communication within two elements or an interaction relationship between two elements. For those ordinary skilled in the art, specific meanings of the above terms in this disclosure can be understood based on a specific situation.

In this disclosure, unless otherwise specified and limited, a first feature being located "above" or "below" a second feature can involve direct contact between the first feature and second feature, or can involve that the first feature and second feature are not in direct contact with each other but in contact through additional features between them. Moreover, the first feature being located "over," "above," or "on" the second feature can involve that the first feature is directly above and obliquely above the second feature, or merely represent that the level of the first feature is higher than that of the second feature. The first feature being located "under," "below," or "beneath" the second feature can involve that the first feature is directly below and obliquely below the second feature, or merely represent that the level of the first feature is lower than that of the second feature.

The following disclosure provides many different embodiments or examples for implementing different structures of this disclosure. To simplify this disclosure, components and settings of specific examples are described below. Of course, they are merely examples and are not intended to limit this disclosure. In addition, at least one of reference numerals or reference letters can be repeated in different examples in this disclosure, and this repetition is for a purpose of simplicity and clarity, and does not in itself represent a relationship between at least one of various implementation manners or settings discussed. In addition, this disclosure provides examples of various specific processes and materials, but at least one of application of other processes or use of other materials can be conceived by those ordinary skilled in the art.

Inventors of this disclosure conceived that crosstalk is made random by changing relative light-emitting time sequences of parallel light-emitting channels within a particular time range, and then an echo pulse with a stable position in two detection orientations is selected as a real echo signal reflected by an object in a detected direction by pulse filtering.

Preferred embodiments of this disclosure are described below with reference to drawings. It should be understood that the preferred embodiments described herein are merely intended to illustrate and explain this disclosure, but not to limit this disclosure.

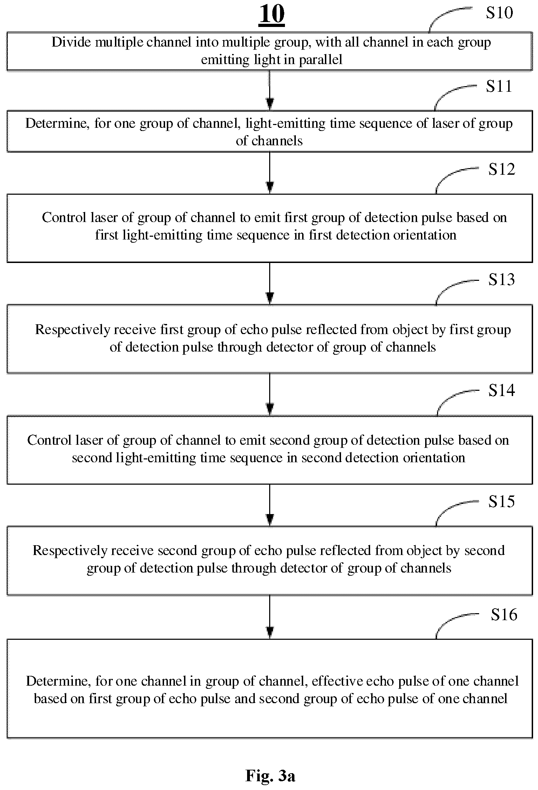

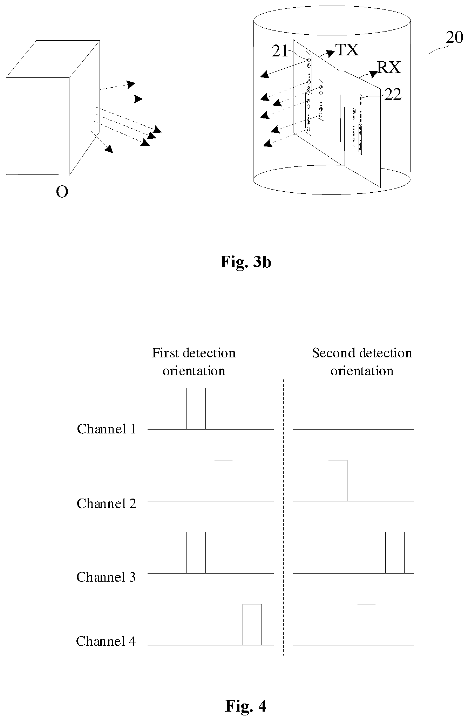

Fig. 3a shows a flowchart of a control method for a LiDAR, provided in an embodiment of this disclosure, which can also be combined with reference to a LiDAR 20 shown in Fig. 3b. The LiDAR 20 includes multiple channels, each channel includes at least one laser 21 and at least one detector 22, and a control method 10 includes steps S10 to S16 as follows.

At step S 10, the multiple channels are divided into multiple groups, and each group of channels emits light in parallel. An expression "emit light in parallel" means that the multiple channels complete signal transmission and echo reception within a time window, and light-emitting time of these channels can overlap with each other, but it is not necessarily to emit the light or receive the light at the same time. To complete one detection of a distance between an obstacle and a LiDAR, a laser can emit light at a time point t1, and the light return when encountering the obstacle at a predetermined farthest distance dmax that a LiDAR can detect. An echo is received by a detector at time point t2, and a time window ≈ dmax/2C (C is speed of light) ≈ t2-t1.

At step S11, for channels in one group, light-emitting time sequences of lasers 21 of the channels are determined, where a first light-emitting time sequence used in a first detection orientation is different from a second light-emitting time sequence used in a second detection orientation.

Among them, the light-emitting time sequences include relative light-emitting time sequences of multiple lasers 21 in one group of channels, that is, time sequences of starting to emit the light.

Based on a preferred embodiment of this disclosure, at least part of the lasers 21 of the group of channels emit light at different times, for the first light-emitting time sequence and the second light-emitting time sequence.

Fig. 4 shows a comparison diagram of light-emitting time sequences in a first detection orientation and a second detection orientation, provided in an embodiment of this disclosure. The group of channels includes channel 1, channel 2, channel 3, and channel 4, and each channel includes one laser 21. The first light-emitting time sequence in the first detection orientation is as follows: firstly, the laser 21 of the channel 1 and the laser 21 of the channel 3 emit the light at the same time, then the laser 21 of the channel 2 emits the light, and finally the laser 21 of the channel 4 emits the light. The second light-emitting time sequence in the second detection orientation is as follows: firstly, the laser 21 of the channel 2 emits the light, then the laser 21 of the channel 1 and the laser 21 of the channel 4 emit the light at the same time, and finally the laser 21 of the channel 3 emits the light.

An interval between the first detection orientation and the second detection orientation is a vertical angular resolution or a horizontal angular resolution of the LiDAR 20. The first light-emitting time sequence used in the first detection orientation is different from the second light-emitting time sequence used in the second detection orientation, to cause crosstalk to be random, which facilitates selecting of a real echo pulse.

In the following, further description is made by taking the interval between the first detection orientation and the second detection orientation to be the horizontal angular resolution as an example.

At step S12, the lasers 21 of the group of channels are controlled to emit a first group of detection pulses based on the first light-emitting time sequence in the first detection orientation.

Based on a preferred embodiment of this disclosure, at the step S12, at least one of pulses emitted by the lasers 21 of the group of channels is used as a ranging pulse.

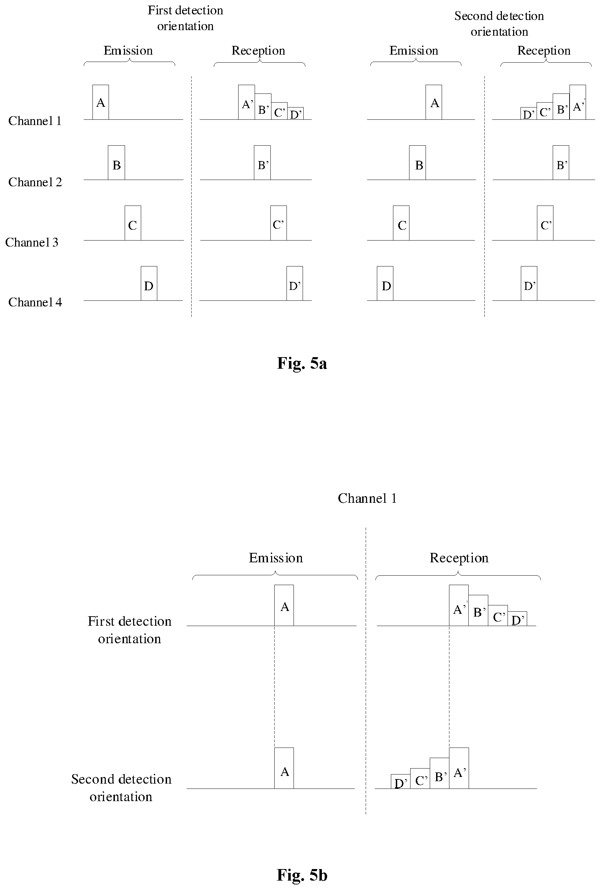

Fig. 5a shows a schematic diagram of emission and reception in the first detection orientation and the second detection orientation, provided in an embodiment of this disclosure. The group of channels includes channel 1, channel 2, channel 3, and channel 4, and each channel includes one laser 21. The first light-emitting time sequence in the first detection orientation is as follows: firstly, the laser 21 of the channel 1 emits a ranging pulse A, then the laser 21 of the channel 2 emits a ranging pulse B, next the laser 21 of the channel 3 emits a ranging pulse C, and finally the laser 21 of the channel 4 emits a ranging pulse D. Among them, the lasers 21 of the channels 1 to 4 can emit a single pulse or multiple pulses, and at least one of pulses emitted by each laser 21 is used as the ranging pulse. In Fig. 5a, an example of each channel including one ranging pulse in the first detection orientation is taken. For clarity, merely ranging pulses of respective channels are shown in Fig. 5a.

At step S13, a first group of echo pulses reflected from an object by the first group of detection pulses are respectively received through detectors 22 of the group of channels.

Based on a preferred embodiment of this disclosure, at the step S13, an echo pulse received through a detector 22 of each channel in the group of channels includes the effective echo pulse and crosstalk generated by other channels

After the lasers 21 of the group of channels emit the ranging pulses, ranging echo pulses reflected from the object by ranging pulses are respectively received through the detectors 22 of the group of channels.

Still with reference to Fig. 5a, each channel includes one detector 22. In the first detection orientation, the detector 22 of the channel 1 receives a ranging echo pulse A' after the ranging pulse A is reflected by a target object, the detector 22 of the channel 2 receives a ranging echo pulse B' after the ranging pulse B is reflected by a target object, the detector 22 of the channel 3 receives a ranging echo pulse C' after the ranging pulse C is reflected by a target object, and the detector 22 of the channel 4 receives a ranging echo pulse D' after the ranging pulse D is reflected by a target object. Among them, the channel 1 further receives crosstalk corresponding to the ranging echo pulse B', the ranging echo pulse C', and the ranging echo pulse D'. To simplify the drawings and the description, the crosstalk and the ranging echo pulse use the same reference numeral, and the crosstalk of other channels is not shown in Fig. 5a.

At step S14, the lasers 21 of the group of channels are controlled to emit a second group of detection pulses based on the second light-emitting time sequence in the second detection orientation. The light-emitting time sequence can include a time point of starting to emit the light.

Based on a preferred embodiment of this disclosure, at the step S14, at least one of pulses emitted by the lasers 21 of the group of channels is used as a ranging pulse.

Still with reference to Fig. 5a, the second light-emitting time sequence in the second detection orientation is as follows: firstly, the laser 21 of the channel 4 emits the ranging pulse D, then the laser 21 of the channel 3 emits the ranging pulse C, next the laser 21 of the channel 2 emits the ranging pulse B, and finally the laser 21 of the channel 1 emits the ranging pulse A. In Fig. 5a, an example of each channel including one ranging pulse in the second detection orientation is taken. For clarity, merely ranging pulses of respective channels are shown in Fig. 5a.

At step S15, a second group of echo pulses reflected from the object by the second group of detection pulses are respectively received through the detectors 22 of the group of channels.

Based on a preferred embodiment of this disclosure, at the step S15, an echo pulse received through a detector 22 of each channel in the group of channels includes the effective echo pulse and crosstalk generated by other channels.

After the lasers 21 of the group of channels emit the ranging pulses, the ranging echo pulses reflected from the object by the ranging pulses are respectively received through the detectors 22 of the group of channels.

Still with reference to Fig. 5a, in the second detection orientation: the detector 22 of the channel 1 receives a ranging echo pulse A' after the ranging pulse A is reflected by a target object, the detector 22 of the channel 2 receives a ranging echo pulse B' after the ranging pulse B is reflected by a target object, the detector 22 of the channel 3 receives a ranging echo pulse C' after the ranging pulse C is reflected by a target object, and the detector 22 of the channel 4 receives a ranging echo pulse D' after the ranging pulse D is reflected by a target object. Among them, the channel 1 also receives crosstalk corresponding to the ranging echo pulse B', the ranging echo pulse C', and the ranging echo pulse D'. To simplify the drawings and the description, the crosstalk and the ranging echo pulse use the same reference signs, and the crosstalk of other channels is not shown in Fig. 5a.

At step S16, for one channel in the group of channels, an effective echo pulse of the one channel is determined based on the first group of echo pulses and the second group of echo pulses of the one channel.

Determining the effective echo pulse of the one channel can be achieved by determining the echo pulse with the stable position of the one channel in the first detection orientation and the second detection orientation. The stable position means that relative deviation between the position of a particular echo pulse occurring in the first echo pulse and the second echo pulse is very small, which is basically fixed and stable, and there is no fluctuation or deviation exceeding a predetermined threshold, so that it can be used as the effective echo pulse of the one channel in at least one of the first detection orientation or the second detection orientation. This is because the first light-emitting time sequence used in the first detection orientation is different from the second light-emitting time sequence used in the second detection orientation, and the position where a crosstalk signal occurs can become random, while a real echo can occur in the same position in the first echo pulse and the second echo pulse. Therefore, by doing so, an echo with the stable position is selected as the real echo pulse, and then distance information of an actual obstacle can be determined based on the real echo.

Still with reference to Fig. 5a, although the channels 1, 2, 3, and 4 emit the light in parallel, there is still a particular relative time sequence among them, that is, in the first detection orientation, the channels 1, 2, 3, and 4 have successively later light-emitting time points. In the second detection orientation, the channels 1, 2, 3, and 4 are still parallel light-emitting channels, but the relative time sequence among them is different from that in the first detection orientation, that is, in the second detection orientation, the channels 1, 2, 3, and 4 have successively earlier light-emitting time points.

Based on a preferred embodiment of this disclosure, the step S16 includes: an echo pulse of the one channel that coincides with each other in the first detection orientation and the second detection orientation is determined based on time matching degree.

After the relative light-emitting time sequence is changed, the light-emitting time sequence of the first detection orientation is different from the light-emitting time sequence of the second detection orientation, and therefore the crosstalk occurs at different times. If ranging results of the two detection orientation are continuous, the effective echo pulse with the stable position can be selected by matching based on time and the pulse filtering. In other words, a logic behind this disclosure is as follows. By changing the relative light-emitting time sequence of the parallel light-emitting channels in two horizontal detection orientations, the position of the crosstalk signal (from other parallel light-emitting channels) in the echo received by the channel to be detected is disorganized, to cause the crosstalk to become random, and it is considered by default that the ranging results of channels to be detected in adjacent two horizontal detection orientations are continuous (for any one channel, a ranging result $d_i$ at a horizontal angle $\theta_i$ = a ranging result $d_{i+1}$ at a horizontal angle $\theta_{i+1}$). It means that the position of the echo corresponding to a real external obstacle in a received echo signal is fixed. Therefore, by shifting the light-emitting time of pulses in the two horizontal detection orientations to be consistent and after shifting the echo pulses by the same size, two echo pulses are compared and the echo pulse with the stable position in the two echo pulses can be selected as the real echo pulse generated by the external obstacle, and then the real echo pulse is used to calculate information of the external obstacle such as distance or reflectivity.

In the following, further detailed description is made through preferred embodiments.

Based on a preferred embodiment of this disclosure, the step S16 includes: for one channel in the group of channels, emitting time of the ranging pulse of the one channel in the first detection orientation and the second detection orientation are shifted relatively to coincide with each other, and two ranging results are compared to select an echo pulse with a stable position. Among them, a sliding window operation is performed on the echo of the one channel, that is, the ranging pulses of the channel in the first detection orientation and the second detection orientation are relatively shifted to make their emitting time coincide with each other. The sliding window operation and a sliding window range can be introduced in the following paragraphs combined with embodiments.

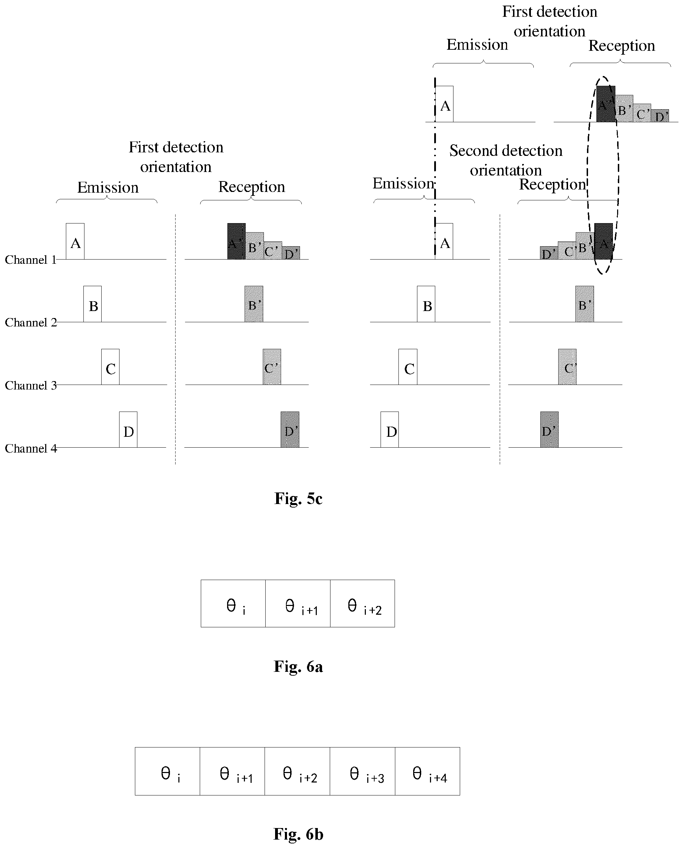

Fig. 5b shows a schematic diagram of sliding window process for a channel 1 in Fig. 5a, and Fig. 5c shows a schematic diagram of detection and sliding window modes in two detection orientations in Fig. 5a. With reference to Figs. 5A to 5c, it can be seen that emission time positions of the ranging pulse A in the first detection orientation and the second detection orientation are relatively shifted to coincide with each other, and then pulse results measured in the first detection orientation and the second detection orientation are compared, from which a pulse with the stable position is filtered out and selected as the effective or real echo pulse in the first detection orientation, and further, after the effective echo pulse is processed, ranging information of the channel 1 is calculated. Specifically, after the emission positions of the ranging pulse A in the first detection orientation and the second detection orientation are relatively shifted to coincide with each other, the position of the ranging echo pulse A' is determined by comparing the ranging echo pulse A' measured in the first detection orientation and the second detection orientation. If a leading edge of the ranging echo pulse A' does not coincide with crosstalk pulses B', C', and D', the ranging echo pulse A' can be used as the effective echo pulse in at least one of the first detection orientation or the second detection orientation.

Based on a preferred embodiment of this disclosure, at the step S13 and the step S15, ranging echo pulses reflected from the object by ranging pulse are respectively received through the detectors 22 of the group of channels, and the step S16 includes: for one channel in the group of channels, the emitting time of the ranging pulse of the one channel in the first detection orientation and the second detection orientation are shifted relatively to coincide with each other, where the ranging echo pulse that is staggered in time is the echo pulse with the stable position.

Still with reference to Fig. 5b, in the first detection orientation and the second detection orientation, the ranging echo pulse A' is just staggered by one pulse width from the crosstalk B', the crosstalk C', and the crosstalk D' received by the channel 1. This is an ideal situation. When emitting the pulse, the ranging echo pulse A' can be made not to overlap the crosstalk B', the crosstalk C', and the crosstalk D' as much as possible by changing the light-emitting time sequence, to cause the position of the ranging echo pulse A' to be stable, and the ranging echo pulse A' can be used as the effective echo pulse in the first detection orientation.

To improve efficiency of determining the real echo when the echo pulse at least partially overlaps the crosstalk, the step S11 further includes: a light-emitting time sequence of the lasers 21 of the group of channels in at least one other detection orientation after the second detection orientation is determined, where a light-emitting time sequence in the at least one other detection orientation is different from the first light-emitting time sequence and the second light-emitting time sequence, and the step S16 includes: for one channel in the group of channels, the sliding window process shown in Figs. 5a to 5c is performed on echo signals of the one channel in the first detection orientation, the second detection orientation, and the at least one other detection orientation, to determine the echo pulse with the stable position as the effective echo pulse of the one channel in at least one of the first detection orientation or the second detection orientation. A principle is that if different light-emitting time sequences are determined for multiple detection orientations, even if the ranging echo pulse overlaps the crosstalk, the crosstalk signal is staggered from the real echo in some detection orientations after the sliding window process is performed on the echo signals in as many different detection orientations as possible, and in this way, the real echo signal can be finally found. For example, m kinds of relative light-emitting time sequences are determined for n parallel light-emitting channels, light is emitted in parallel respectively based on the m kinds of light-emitting time sequences in m detection orientations (which can be at a horizontal angle $\theta_i$-$\theta_{i+m}$), and then the sliding window process is performed on detection echo signals determined by the same channel using the different light-emitting time sequences, to cause the real echo signal to be found when the ranging echo pulse overlaps the crosstalk, thereby improving ranging accuracy.

Based on a preferred embodiment of this disclosure, a time difference between the first detection orientation and the second detection orientation and the at least one other detection orientation is within a predetermined time range. The predetermined time range should ensure that ranging results in the first detection orientation, the second detection orientation, and the at least one other detection orientation are continuous, that is, for any one channel, the ranging result in the first detection orientation is equal to the ranging result in the second detection orientation and is equal to the ranging result in the at least one other detection orientation. The predetermined time range is related to rotating speed of a LiDAR. The larger the rotating speed of the LiDAR is, the wider the time range can be determined, the stronger an anti-jamming effect can be, and the easier it can be to select the real ranging echo pulse. Preferably, the predetermined time range is determined as a multiple of a time interval corresponding to the horizontal angular resolution.

Performing the sliding window process in the multiple detection orientations includes: for one channel, the emitting time of the ranging pulse in the first detection orientation, the second detection orientation, and the at least one other detection orientation is shifted relatively to coincide with each other. The sliding window range can be described through embodiments in the following.

FIG. 6a shows a schematic diagram of a first sliding window range, provided in an embodiment of this disclosure, in which a first detection orientation corresponds to a horizontal field of view $\theta_i$, a second detection orientation corresponds to a horizontal field of view $\theta_{i+1}$, and a third detection orientation corresponds to a horizontal field of view $\theta_{i+2}$. For example, for one group of channels, ranging results of the group of channels at the horizontal field of view $\theta_i$, the horizontal field of view $\theta_{i+1}$, and the horizontal field of view $\theta_{i+2}$ are respectively determined. For one of the channels, the emitting time of the ranging pulse of the channel at the horizontal field of view $\theta_i$, the horizontal field of view $\theta_{i+1}$, and the horizontal field of view $\theta_{i+2}$ is relatively shifted to coincide with each other, and three ranging results are compared to select the echo pulse with the stable position. Among them, a time difference between the horizontal field of view $\theta_i$, the horizontal field of view $\theta_{i+1}$, and the horizontal field of view $\theta_{i+2}$ is within the predetermined time range.

Fig. 6b shows a schematic diagram of a second sliding window range, provided in an embodiment of this disclosure, in which a first detection orientation corresponds to a horizontal field of view $\theta_i$, a second detection orientation corresponds to a horizontal field of view $\theta_{i+1}$, a third detection orientation corresponds to a horizontal field of view $\theta_{i+2}$, a fourth detection orientation corresponds to a horizontal field of view $\theta_{i+3}$, and a fifth detection orientation corresponds to a horizontal field of view $\theta_{i+4}$. For example, for one group of channels, ranging results of the group of channels at the horizontal field of view $\theta_i$, the horizontal field of view $\theta_{i+1}$, the horizontal field of view $\theta_{i+2}$, the horizontal field of view $\theta_{i+3}$ and the horizontal field of view $\theta_{i+4}$ are respectively determined. For one of the channels, the emitting time of the ranging pulse of the channel at the horizontal field of view $\theta_i$, the horizontal field of view $\theta_{i+1}$, the horizontal field of view $\theta_{i+2}$, the horizontal field of view $\theta_{i+3}$, and the horizontal field of view $\theta_{i+4}$ is shifted relatively to coincide with each other, and five ranging results are compared to select the echo pulse with the stable position. Among them, a time difference among the horizontal field of view $\theta_i$, the horizontal field of view $\theta_{i+1}$, the horizontal field of view $\theta_{i+2}$, the horizontal field of view $\theta_{i+3}$, and the horizontal field of view $\theta_{i+4}$ is within the predetermined time range.

The larger the sliding window range is, the higher probability of selecting the ranging echo pulse with the stable position can be. However, time and computation is taken, a balance between the sliding window range and the ranging accuracy should be considered.

Based on a preferred embodiment of this disclosure, the step S16 further includes: the echo pulses with the stable positions of the one channel in the first detection orientation and the second detection orientation are determined based on the echo pulses of at least one second channel in the first detection orientation and the second detection orientation. In this embodiment, interference in the group of channels and interference to the group of channels by at least one second channel are made random by changing the light-emitting time sequence in different detection orientations, and then the real ranging echo pulse with the stable position is selected by performing the sliding window process and the pulse filtering.

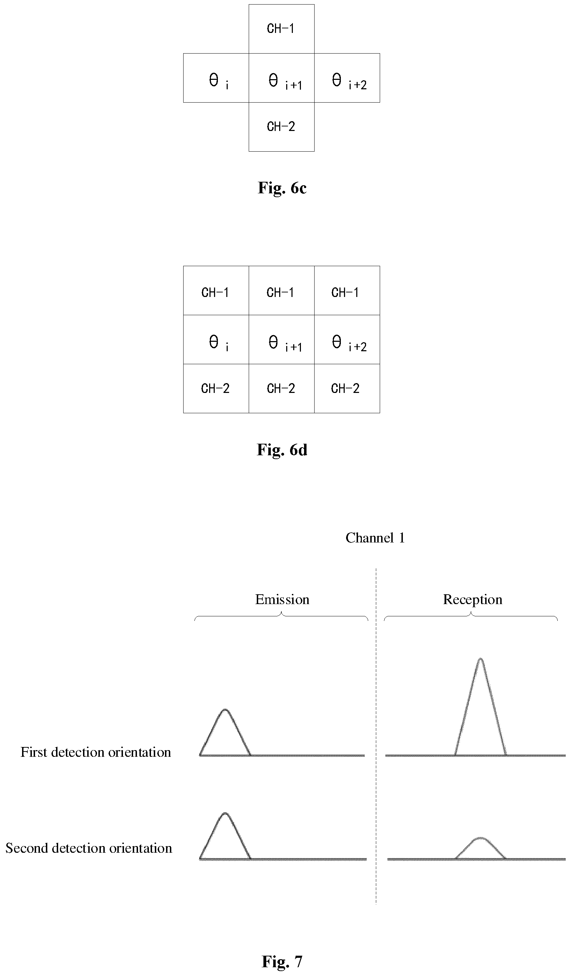

Fig. 6c shows a schematic diagram of a third sliding window range, provided in an embodiment of this disclosure, in which a first detection orientation corresponds to a horizontal field of view $\theta_i$, a second detection orientation corresponds to a horizontal field of view $\theta_{i+1}$, and a third detection orientation corresponds to a horizontal field of view $\theta_{i+2}$. Among them, two second channels are included, namely CH-1 and CH-2, and CH-1 corresponds to a previous vertical channel and CH-2 corresponds to a next vertical channel. Among them, the vertical channel includes adjacent channels that have been measured in the vertical direction or relatively upper channels (with reference to Fig. 2a). For example, for one group of channels, the ranging results of the group of channels at the horizontal field of view $\theta_i$, the horizontal field of view $\theta_{i+1}$ and

the horizontal field of view $\theta_{i+2}$, and ranging results of the previous vertical channel and the next vertical channel of the group of channels at the horizontal field of view $\theta_{i+1}$ are respectively determined. For one of the channels, the emitting time of the ranging pulse of the channel at the horizontal field of view $\theta_i$, the horizontal field of view $\theta_{i+1}$, and the horizontal field of view $\theta_{i+2}$ is shifted relatively to coincide with each other, and the ranging results above are compared to select the echo pulse with the stable position. Among them, a time difference between the horizontal field of view $\theta_i$, the horizontal field of view $\theta_{i+1}$, and the horizontal field of view $\theta_{i+2}$ is within the predetermined time range.

Fig. 6d shows a schematic diagram of a fourth sliding window range, provided in an embodiment of this disclosure, in which a first detection orientation corresponds to a horizontal field of view $\theta_i$, a second detection orientation corresponds to a horizontal field of view $\theta_{i+1}$, and a third detection orientation corresponds to the horizontal field of view $\theta_{i+2}$, and a second channel CH-1 corresponds to a previous vertical channel and a second channel CH-2 corresponds to a next vertical channel. For example, for one group of channels, the ranging results of the group of channels at the horizontal field of view $\theta_i$, the horizontal field of view $\theta_{i+1}$, and the horizontal field of view $\theta_{i+2}$, and the ranging results of the previous vertical channel and the next vertical channel of the group of channels at the horizontal field of view $\theta_{i+1}$, the horizontal field of view $\theta_{i+1}$, and the horizontal field of view $\theta_{i+2}$ are respectively determined. For one of the channels, the emitting time of the ranging pulse of the channel at the horizontal field of view $\theta_i$, the horizontal field of view $\theta_{i+1}$, and the horizontal field of view $\theta_{i+2}$ is shifted relatively to coincide with each other, and the ranging results above are compared to select the echo pulse with the stable position. Among them, a time difference between the horizontal field of view $\theta_i$, the horizontal field of view $\theta_{i+1}$, and the horizontal field of view $\theta_{i+2}$ is within the predetermined time range.

The sliding window range is introduced through four embodiments above. Through the sliding window process in a time dimension and a space dimension, the real ranging echo pulse is selected, which can be used as the effective echo pulse in the first detection orientation or the effective echo pulse in the second detection orientation, thereby reducing data computation to a particular extent.

Based on a preferred embodiment of this disclosure, the step S16 includes: the echo pulses with the stable positions are determined as the effective echo pulses of the one channel in at least one of the first detection orientation or the second detection orientation when a difference value or a ratio of amplitudes of the echo pulses with the stable positions of the one channel in the first detection orientation and the second detection orientation exceeds a predetermined threshold.

If the ranging results in the first detection orientation and the second detection orientation are continuous, that is, for any one channel, the ranging result in the first detection orientation is equal to the ranging result in the second detection orientation, and the effective echo pulse can be selected by performing multi-dimensional sliding window process and the pulse filtering. If the ranging results in the first detection orientation and the second detection orientation are discontinuous, there is no need for operations of performing the sliding window process and using the pulse filtering.

Fig. 7 shows a comparison diagram of ranging results in a first detection orientation and a second detection orientation, provided in an embodiment of this disclosure. For the channel 1, the ranging pulse emitted by the laser 21 in the first detection orientation has the same magnitude as the ranging pulse emitted by the laser 21 in the second detection orientation. The ranging echo pulse received by the corresponding detector 22 in the first detection orientation is much larger than the ranging echo pulse received in the second detection orientation. In such a case, the ranging result in the first detection orientation is not equal to the ranging result in the second detection orientation, and there is no need for the operations of performing the sliding window process and the pulse filtering. Among them, an amplitude ratio of the ranging echo pulse received in the first detection orientation to the ranging echo pulse received in the second detection orientation is, for example, equal to or more than 80 percent, which is merely for illustrative purposes herein, and a threshold can also be determined for an amplitude difference between ranging echo pulses in different detection orientations.

To sum up, the control method 10 is described through the steps S10 to S16 and multiple preferred embodiments. By changing the relative light-emitting time sequence of the parallel light-emitting channel within a particular time range and combining with the multi-dimensional sliding window and filtering, the crosstalk among the parallel light-emitting channels is reduced, thereby improving the signal-to-noise ratio and the ranging accuracy. The above selection of different light-emitting time sequences is random, the method is simple, and both the data computation and the ranging accuracy are taken into account. In the following, the light-emitting time sequence is coded through another preferred embodiment, so that the ranging results of multiple parallel light-emitting channels are the most ideal and completely non-overlapping results, making the ranging accuracy controllable. In addition, this specification provides operation steps of the method as described in the embodiments or flowcharts, but more or less operation steps can be included based on routine or non-creative labor. A sequence of the steps listed in the embodiments is merely one of many execution sequences of the steps, and does not represent a unique execution sequence. When a system or a device product is executed in practice, it can be executed sequentially or in parallel based on the method shown in the embodiments or the flowcharts.

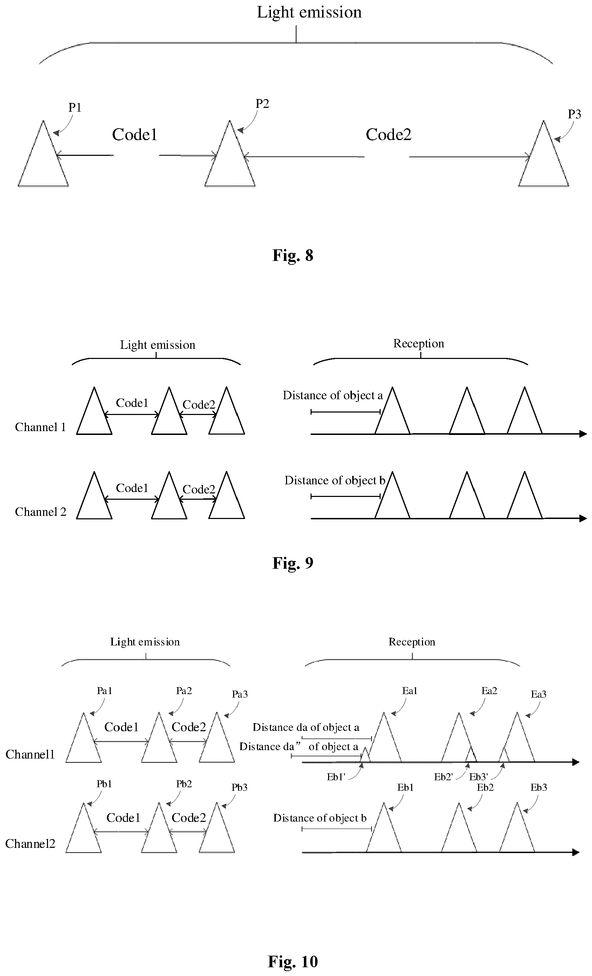

To minimize the overlap between the real echo and the crosstalk signal as much as possible, the light-emitting time sequence of the parallel light-emitting channel can be coded in advance, and a specific coding method can be described in detail with reference to Figs. 8 to 13. In the following description, the same steps as above are not repeated, merely improved steps and a coding method of the light-emitting time sequence are described.

When the multiple channels emit the light in parallel, the crosstalk is prone to occur between the channels, and therefore the crosstalk can be eliminated or alleviated by coding. Generally, to complete one detection (generating a point in point cloud), the LiDAR 20 can control the laser 21 to emit two or more pulses. With reference to Fig. 8, taking three pulses as an example, the laser 21 emits a first detection pulse p1, then a second detection pulse p2 after a time interval of code1, and then a third pulse p3 after a time interval of code2. For dual pulses, the laser 21 emits the first detection pulse p1, and then emits the second detection pulse p2 after the time interval of code1. For the parallel light-emitting channel, code1 of different sizes can be determined. The above is one of encoding methods for setting specific time intervals code1 and code2 for multiple pulses P1, P2, and P3.

For the LiDAR 20, after the laser 21 emits three detection pulses P1, P2, and P3 at the time intervals of code1 and code2, when three pulses with the time intervals of code1 and code2 are identified from a group of received pulses (there can be multiple pulses, e.g., more than three pulses), it can be considered at this time that an object has been detected in this light-emitting measurement. If the three pulses with the time intervals of code1 and code2 are not identified, it is considered that no object has been detected in this light-emitting measurement. This identification method is relatively accurate and can reduce noise points as much as possible, but it needs too much computation and is prone to losing points.

Fig. 9 shows a detection process of two channels in an ideal situation. There is no electrical crosstalk and optical crosstalk between the two channels, or the electrical crosstalk and the optical crosstalk have been eliminated. As shown in Fig. 9, the pulse emitted by the channel 1 detects an object a, and the pulse emitted by the channel 2 detects an object b. When there is no optical crosstalk or electrical crosstalk between the channel 1 and the channel 2, each channel merely receives the reflected echo pulse of the object corresponding to its own channel. Therefore, a ranging result of the object a is generally calculated based on features of an echo waveform, and a distance of the object a can be accurately determined based on a calculation result.

Fig. 10 shows a case where there is crosstalk between two channels. The pulse emitted by the channel 1 detects the object a, and the pulse emitted by the channel 2 detects the object b. The channel 1 emits three detection pulses Pa1, Pa2, and Pa3, and correspondingly receives three echo pulses Ea1, Ea2, and Ea3. The channel 2 emits three detection pulses Pb1, Pb2, and Pb3, and correspondingly receives three echo pulses Eb1, Eb2, and Eb3. When there is the crosstalk between the channel 1 and the channel 2, the three echo pulses of the channel 2 can respectively generate the crosstalk on the channel 1, as shown by crosstalk echo pulses Eb1', Eb2', and Eb3' in Fig. 10. Because the echo pulses of the channel 1 and the channel 2 have a particular degree of coincidence on a time axis, the crosstalk echo pulses Eb1', Eb2', and Eb3' are respectively superimposed on the echo pulses Ea1, Ea2, and Ea3 of the channel 1, causing waveforms of the echo pulses Ea1, Ea2, and Ea3 to change. In the case shown in Fig. 10, arrival time of the finally determined echo can be inaccurate, resulting in an inaccurate distance result, and for example, there is a possibility of causing the distance of the object a to be calculated as da' instead of a real value da. Therefore, in the case of Fig. 10, when the channel 1 receives the echoes of the object a and the echoes of object b (which should actually occur in an orientation corresponding to the channel 2) due to the crosstalk (there is actually no object B in a direction of the channel 1), the echo pulse of the object a as such can be superimposed with the crosstalk echo pulse, resulting in a change of the features of the echo waveform of the object a. In such a case, the ranging result of the object a is also calculated with the leading edge and the pulse width, but there can be some deviation from a result without the crosstalk. The degree of deviation depends on the degree of deviation in the leading edge and the pulse width.

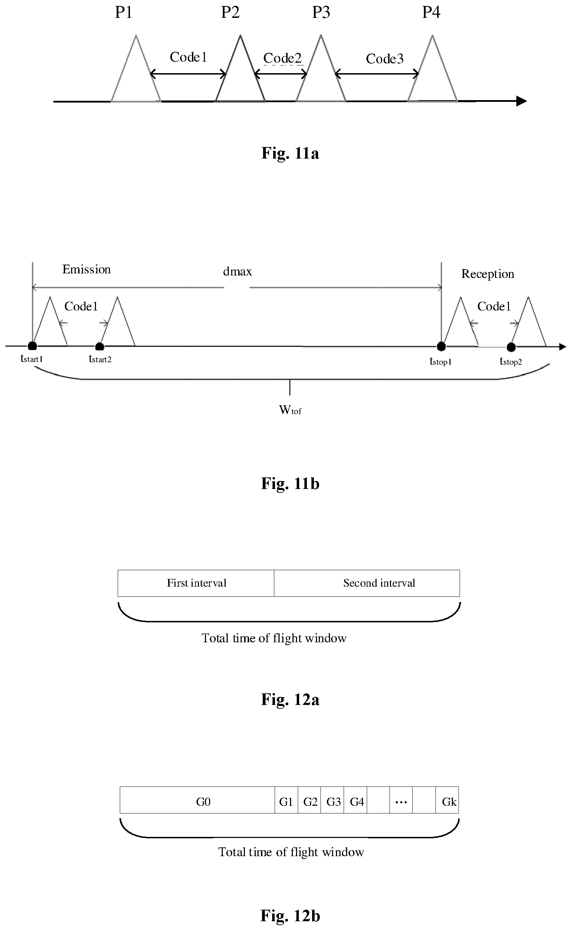

A total time of flight window is represented by $W_{tof}$, which is related to a longest detection distance dmax of the LiDAR 20, and a specific value of dmax can vary for each LiDAR 20. To complete one ranging (generating a point in the point cloud), the LiDAR 20 can emit a single pulse or multiple pulses. For a case that the LiDAR 20 emits a single pulse, the total time of flight window $W_{tof} \approx d_{max}$ can be determined (in the field of the LiDAR, the distance can usually be converted to and correspond to time, and therefore the time window is represented by the distance herein, which is more accurately expressed as: $W_{tof} = 2*d_{max}/c$, where c is the speed of light. However, for brevity, an expression $W_{tof} \approx d_{max}$ is still used in the following, and the meaning of which can clearly understood by those skilled in the art). With reference to Fig. 11a, if the LiDAR 20 emits the dual pulses P1 and P2, the pulse interval is code1; if the LiDAR 20 emits the three pulses P1, P2, and P3, the pulse intervals are code1 and code2, respectively; and if the LiDAR 20 emits four pulses P1, P2, P3, and P4, the pulse intervals are code1, code2, and code3, respectively. If each channel emits the multiple pulses, when calculating the total time of flight window $W_{tof}$, it also needs to be considered that the last pulse among the multiple pulses should also be received within the total time-of-flight window $W_{tof}$, and therefore a moment when the last pulse returns from $d_{max}$ should also be within the total time-of-flight window. With reference to Fig. 11b, taking emitting the dual pulses as an example, the total time of flight window (or detection window) is expressed as $W_{tof} = d_{max}+code1$. Similarly, if three pulses are emitted, the total time-of-flight window $W_{tof} \approx d_{max}+code1+code2$ can be determined; and when four pulses are emitted, the total time-of-flight window $W_{tof} \approx d_{max}+code1+code2+code3$ can be determined. Those skilled in the art can understand that these formulas are not an accurate way to calculate the total time-of-flight window in the LiDAR, and in practice, charging time of the laser 21, the pulse width, or the like should be considered. This is merely for illustrative purposes herein, and a specific calculation method of the total time of flight window is not limited in this disclosure.

The ranging pulse is a pulse configured to calculate the time of flight ToF. If the LiDAR 20 emits a single pulse, the single pulse is the ranging pulse, and calculation of the time of flight starts with the laser 21 emitting the ranging pulse as the timing, and ends with the detector 22 receiving the ranging echo pulse reflected from the ranging pulse on the object as the timing. If the LiDAR 20 emits the multiple pulses, one or more pulses can be selected from the multiple pulses as the ranging pulses. For example, with reference to Fig. 11b, the laser 21 emits the dual pulses. If a first pulse is used as the ranging pulse, a time point of emitting the ranging pulse is $t_{start1}$, and a time point of receiving the ranging echo pulse corresponding to the ranging pulse by the detector 22 is $t_{stop1}$, and the time of flight is $t_{stop1}$-$t_{start1}$. Those skilled in the art can understand that this formula is not an accurate way to calculate the time of flight in the LiDAR, but actually there can be compensation for an offset that can exist for an emitting end (e.g., considering temperature drift and response of the laser, or the like). For a receiving end, to improve the signal-to-noise ratio, it involves setting a threshold for a received signal, for example, a time point when intensity of a received echo pulse is greater than the threshold is taken as an end moment of timing. This is merely for illustrative purposes herein, and a specific calculation method of the time of flight is not limited in this disclosure.

The following continues to describe the preferred embodiments.

Based on a preferred embodiment of this disclosure, the step S11 includes:

the first light-emitting time sequence and the second light-emitting time sequence are determined in such a manner: the first light-emitting time sequence and the second light-emitting time sequence are determined based on one or more of a previous ranging result of each channel in the group of channels, a previous ranging result of a channel adjacent to the channel, or obstacle information, where the first light-emitting time sequence and the second light-emitting time sequence are configured to cause the first group of echo pulses and the second group of echo pulses to be staggered in time.

Based on previous ranging results of each channel in the group of channels, a channel adjacent to the channel, and obstacle information, the time of the ranging echo pulse corresponding to the ranging pulse to be emitted is predicted, and the first light-emitting time sequence and the second light-emitting time sequence are determined. For example, ranging results of the channel at the horizontal field of views $\theta_i$ and $\theta_{i+1}$ are predicted based on ranging results of each channel in the group of channels and the channel adjacent to the channel at the horizontal field of view $\theta_{i-1}$, and the first light-emitting time sequence and the second light-emitting time sequence are determined based on the prediction result. For another example, the distance of the channel detected at the horizontal field of views $\theta_i$ and $\theta_{i+1}$ is predicted based on the distance of each channel in the group of channels detected at two adjacent horizontal field of views $\theta_{i-2}$ and $\theta_{i-1}$, and the first light-emitting time sequence and the second light-emitting time sequence are determined based on the prediction result. For yet another example, the ranging result of the ranging pulse to be emitted is predicted by combining technologies of object recognition (e.g., whether the object is a static obstacle, a slow obstacle, or a fast-moving obstacle) and distance prediction, combining with the previous ranging result, and the first light-emitting time sequence and the second light-emitting time sequence are determined based on the prediction result.

It should be noted that a purpose of setting the light-emitting time sequence of the laser 21 to be detected in any one or more of the methods is to achieve that ranging pulses of at least part of the parallel light-emitting channels are staggered with each other. Preferably, the ranging pulses of respective parallel light-emitting channels in the group of channels are staggered. A specific degree of staggering is based on the fact that a subsequent processor can distinguish a ranging echo pulse and an interference pulse of its own channel, without affecting the ranging accuracy of the channel.

It is illustrated through the preferred embodiments that the first light-emitting time sequence and the second light-emitting time sequence are determined based on the previous ranging result. It can be seen that accuracy of the previous ranging result directly affects setting of the light-emitting time sequence and a staggering effect of the ranging echo pulses. The following further describes how to improve the accuracy of the ranging result through the preferred embodiments.

Based on a preferred embodiment of this disclosure, in a case of multiple channels emitting the light in parallel, if respective channels emit the multiple pulses, at least two pulses among the multiple pulses can be selected as the ranging pulses, and the ranging result is determined based on the at least two ranging pulses, thereby reducing the influence of the signal crosstalk and improving the accuracy of the ranging result.

Based on a preferred embodiment of this disclosure, when selecting the multiple ranging pulses, multiple distances can be respectively calculated based on the multiple ranging pulses and the corresponding multiple ranging echo pulses, and further the multiple distances are weighted based on predetermined weights of the multiple ranging pulses to determine the ranging result, thereby reducing the influence of the crosstalk on ranging and improving the ranging accuracy. For example, if four pulses are emitted, as shown in FIG. 11a, and the four pulses are respectively P1, P2, P3, and P4, the pulses P1 to P4 can be selected as the ranging pulses, and a final ranging result is $d = (d_{P1} + d_{P2} + d_{P3} + d_{P4})/4$; or the pulses P2 to P4 also can be selected as the ranging pulses, and a final ranging result is $d = (d_{P2} + d_{P3} + d_{P4})/3$.

In the above two embodiments, the weight of contribution of each pulse to the final ranging result d is the same, which is 1. It can also be considered based on different weights. For example, each pulse is assigned a different weight $X_i$, where $1 > X_i > 0$. For example, the pluses P1 to P4 are selected as the ranging pulses, and a final ranging result is:

$$d = X_{P1}*d_{P1} + X_{P2}*d_{P2} + X_{P3}*d_{P3} + X_{P4}*d_{P4}, \text{ where } X_{P1} + X_{P2} + X_{P3} + X_{P4} = 1.$$

where $X_{P1} + X_{P2} + X_{P3} + X_{P4} = 1$.

It is illustrated above how to improve the accuracy of the ranging result through the embodiments. Based on the previous ranging result, to stagger the ranging echo pulses of respective parallel light-emitting channels, the total time of flight window can be divided into intervals in advance, and then an unmarked and unoccupied interval is allocated to each ranging echo pulse, thereby controlling the position of the ranging echo pulse more accurately. The following can further describe through the preferred embodiments

Based on a preferred embodiment of this disclosure, the control method 10 further includes: dividing a total time of flight window for the lasers of the group of channels into at least a first interval and a second interval, where the first light-emitting time sequence is configured to cause the first group of echo pulses to be distributed in the second interval in a non-overlapping manner; and the second light-emitting time sequence is configured to cause the second group of echo pulses and the first group of echo pulses to be distributed in the second interval in the non-overlapping manner.

Fig. 12a shows a schematic diagram of division of a total time of flight window, provided in an embodiment of this disclosure. The total time of flight window is divided into two intervals, where a first interval is configured to place the other pulses before the ranging echo pulse, and a second interval is configured to place the ranging echo pulses of respective channels. The time of at least part of the ranging echo pulses generated by the ranging pulses to be emitted by the lasers 21 of the multiple channels in each group is predicted. The time of the ranging echo pulse corresponding to the ranging pulse to be emitted is predicted based on the previous ranging result of each channel or a channel adjacent to the channel. Next, the first light-emitting time sequence and second light-emitting time sequence of the group of channels are determined, so that after part of the lasers 21 of the multiple parallel light-emitting channels emit the ranging pulses, generated ranging echo pulses are distributed in the second interval in the non-overlapping manner (a degree of non-overlapping can be different for each LiDAR, and the subsequent processor can distinguish the ranging echo pulse and the crosstalk pulse of the channel without affecting the ranging accuracy of the channel). Among them, non-overlapping of the ranging echo pulse includes that the respective ranging echo pulses are staggered, separated, non-overlapping, spaced apart or fall in different positions in time.

Based on another preferred embodiment of this disclosure, the control method 10 further includes: the second interval are divided into k sub-intervals, where k is an integer greater than or equal to the number of channels in the group, and where the first light-emitting time sequence is configured to cause the first group of echo pulses to be distributed in the k sub-intervals in the non-overlapping manner; and the second light-emitting time sequence is configured to cause the second group of echo pulses and the first group of echo pulses to be distributed in the k sub-intervals in the non-overlapping manner.

FIG. 12b shows a schematic diagram of division of a total time of flight window, provided in another embodiment of this disclosure. The total time of flight window is divided into k+1 sub-intervals, namely G0, G1, G2, ..., and Gk, where G0 is equivalent to a first interval, and is configured to place other pulses before the firstly received ranging echo pulse; and G1 to Gk are configured to place the ranging echo pulse, where G1 is equivalent to a first sub-interval theoretically configured to place the ranging echo pulse. Ideally, all non-ranging pulses before the firstly received ranging echo pulse are concentrated in G0, rather than appear in G1 to Gk. Specifically for a particular channel, the closer the obstacle of the channel is, the shorter the time of flight of the ranging echo pulse is, and therefore the more the sub-intervals that can be configured to place the ranging echo pulse. The farther the obstacle of the channel is, the longer the time of flight of the ranging echo pulse is, and therefore the less the sub-intervals that can be configured to place the ranging echo pulse.

Based on a preferred embodiment of this disclosure, the length of each sub-interval is greater than the maximum pulse width of the ranging echo pulse of the LiDAR. With reference to Figs. 12a and 12b, for the sub-intervals G1 to GK, the length of each sub-interval is assumed to be G, and G is greater than the maximum pulse width of the ranging echo pulse to ensure that one ranging echo pulse can be placed in each sub-interval. Preferably, G is equal to or more that 2 times the pulse width. The pulse width of each LiDAR can be different. When the width of the maximum pulse is about 30 ns, G is preferably 60 ns or more.

With reference to Figs. 12a and 12b, a dividing principle for the length of the first interval (i.e., the interval G0) is that other pulses before the ranging echo pulse can be placed at a minimum ranging distance. The time window length of G0 is $(W_{tof} - k*G)$, and G1 is theoretically the first sub-interval that can be configured to place the ranging echo pulse. It is desired that all non-ranging echo pulses are concentrated as much as possible within GO, rather than appear in the sub-intervals G1 to GK, to cause the sub-intervals G1 to GK to be configured to place the ranging echo pulses of respective channels.

For example, taking a case where the laser 21 emits three pulses and a third pulse is selected as the ranging pulse as an example, the length of the interval G0 is preferably to cause a first echo pulse and a second echo pulse to be placed at the minimum ranging distance, then $G0 \approx d_{min} + code1 + code2$ can be determined, where $d_{min}$ is a minimum distance that can be measured by the LiDAR. In such a case, the interval G1 is approximately $[d_{min} + code1 + code2, d_{min} + code1 + co-$

de2+G], and therefore G1 is equivalent to a theoretical first sub-interval configured to place the ranging echo pulse (i.e., the echo pulse of the third pulse in this embodiment.)

G1 = G2 = .... = Gk-1 = Gk = G, where k is at least greater than or equal to the number of parallel light-emitting channels. Preferably, k is greater than the number of parallel light-emitting channels. Because it is needed to ensure that ranging echo pulses of respective parallel light-emitting channels occupy one sub-interval, that is, distributed in the sub-intervals G1 to Gk in the non-overlapping manner. In addition, it is also needed to consider that for the channels with the relatively far obstacles, the non-ranging pulses of the channels can also occupy some sub-intervals. Therefore, to further reduce the interference of the ranging echo pulses and the non-ranging echo pulses of other channels on the channel, based on a preferred embodiment of this disclosure, the first light-emitting time sequence and the second light-emitting time sequence can be further configured to cause least part of the ranging echo pulses generated by the ranging pulses emitted by the lasers 21 of the channel to not overlap the non-ranging echo pulses generated by the non-ranging pulses emitted by the lasers 21 of other channels in the group.

Based on a preferred embodiment of this disclosure, the first light-emitting time sequence is configured to cause the first group of echo pulses to be distributed in the k sub-intervals that are unoccupied and nearest; and the second light-emitting time sequence is configured to cause the second group of echo pulses to be distributed in the k sub-intervals that are unoccupied and nearest. The influence of the crosstalk on the ranging result can be reduced by placing the respective ranging echo pulses in the unoccupied sub-interval. Furthermore, the respective ranging echo pulses are placed in the nearest sub-interval as far as possible, thereby shortening measurement time and improving measurement efficiency. The following can describe a coding method of the light-emitting time sequence in detail through the embodiments.

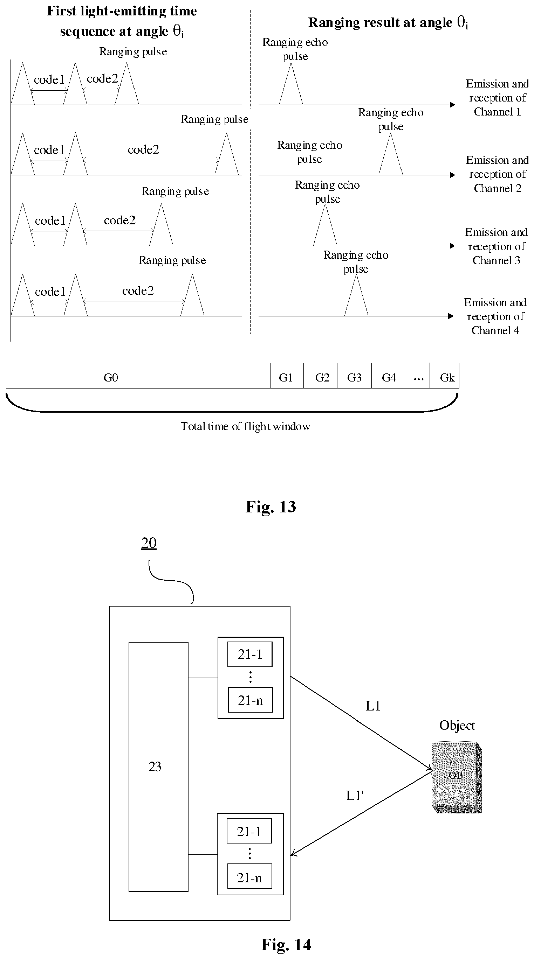

Based on an embodiment of this disclosure, the lasers of one group of four channels (Channel 1, Channel 2, Channel 3, and Channel 4) emit the light in parallel, and the laser 21 of each channel emits the three pulses, where the third pulse is the ranging pulse. With reference to Fig. 12b, the total time of flight window is divided into sub-intervals G0 and G1 to Gk, where midpoint positions of the sub-intervals G1 to Gk are g1 to gk. With reference to Fig. 14, each channel emits the three pulses, the time interval between the first pulse and the second pulse is code1, and the time interval between the second pulse and the third pulse is code2. For the convenience of description, code1 is determined to a fixed value, but those skilled in the art can understand that to reduce the crosstalk from other LiDARs, code1 can also be determined to different values, that is, the pulse interval is coded.

A minimum value of the pulse intervals code1 and code2 is defined as Cmin, and Cmin is related to processing speed of a laser charging circuit of an emission channel. In this embodiment, it can be determined that Cmin is equal to or more than pulse width/2 to distinguish two adjacent pulses more accurately.

After the above settings are made, the previous ranging result is firstly determined based on the control method 10. The four channels Channel 1, Channel 2, Channel 3, and Channel 4 emit the light in parallel, and the ranging results at the horizontal field of view $\theta_{i-1}$ are respectively d1, d2, d3, and d4.

Then, positions (time points) of the ranging echo pulses of the four channels Channel 1, Channel 2, Channel 3, and Channel 4 at the horizontal field of view $\theta_i$ are predicted based on the previous ranging result, and the first light-emitting time sequence is determined based on a predicted position of the ranging echo pulse, that is, code2 of a light-emitting pulse at the angle $\theta_i$ is coded. Specifically, the following steps are performed before emitting the light.

1. A channel Channel x for which code2 has not been calculated is selected, where $x \in (1, 2, 3, 4)$, and its ranging result at the horizontal field of view $\theta_{i-1}$ is dx.
2. A nearest sub-interval Gy is selected from unmarked sub-intervals G1 to GK, and a midpoint position of the sub-interval Gy is gy.
3. It is determined whether the selected sub-interval Gy satisfies a formula: gy - dx - code1 $\geq$ Cmin.

   3.1. If gy - dx - code1 $\geq$ Cmin, code2 of the Channel x is determined to be gy - dx - c1, and the sub-interval Gy is marked. In addition, it is beneficial to determine whether the first pulse and the second pulse occupy other sub-intervals between G1 and Gy. If the other sub-intervals are occupied, the sub-interval is also marked, and cannot be allocated to other ranging pulses.
   3.2. If gy - dx - code1 < Cmin, it represents that the sub-interval Gy is not yet marked, but is not suitable for the channel Channel x. Then, a nearest sub-interval Gz is selected from the unmarked sub-intervals Gy+1 to Gk, and determination in step 3 is repeated.
   3.3. If a qualified sub-interval cannot be found from the unmarked sub-intervals, the sub-interval Gk is selected, and code2 of Channel x is determined to be gk - dx - code1.

4. Steps 1 to 3 are repeated until code2 for all parallel light-emitting channels has been calculated.

After the first light-emitting time sequence of the four channels at the horizontal field of view $\theta_i$ is determined through the above steps, the lasers 21 of the four channels are controlled to emit the light based on the first light-emitting time sequence. As shown in Fig. 13, by doing so, the ranging echo pulses generated by the four parallel light-emitting channels are staggered with each other in time, thereby reducing or avoiding a crosstalk problem. It should be noted that receiving ends of respective channels in Fig. 14 merely show the ranging echo pulses, and the non-ranging echo pulses are not shown to reduce confusion.

A coding method of the second light-emitting time sequence is determined as above, which is not repeatedly described herein.

In addition, it should be noted that when the object is far away, assuming that the object measured at the angle $\theta_i$ of each parallel light-emitting channel is farthest in an extreme case, the ranging echo pulses of respective channels are all divided into the interval Gk to ensure that the point can be measured. However, the farther away the object is, the weaker the crosstalk is (when the obstacle is far away, the echoes of respective channels are all very weak, and the crosstalk to each other is also very weak), and ranging accuracy needs at the distance are low, and therefore ranging needs also can be met.

This disclosure further relates to a computer storage medium including computer executable instructions stored thereon, which, when executed by a processor, implements the control method 10 as described above.

This disclosure further relates to a LiDAR 20, as shown in FIG. 14, including:

multiple lasers 21, such as, a laser 21-1,.., and a laser 21-n, where at least one pulse emitted by each laser 21 is used as a ranging pulse;
multiple detectors 22, such as, a detector 22-1,.., and a detector 22-n, where the multiple lasers 21 and the multiple detectors 22 form multiple channels, and each channel includes at least one laser 21 and at least one detector 22; and
a controller apparatus 23, where the controller apparatus 23 is connected to the multiple lasers 21 and the multiple detectors 22 and divides the multiple channels into multiple groups, each group of channels emits the light in parallel, and the controller apparatus 23 is configured to:
determine, for one group of channels, light-emitting time sequences of lasers 21 of the group of channels, where a first light-emitting time sequence used in a first detection orientation is different from a second light-emitting time sequence used in a second detection orientation;
control the lasers 21 of the group of channels to emit a first group of detection pulses based on the first light-emitting time sequence in the first detection orientation;
respectively receive a first group of echo pulses reflected from an object by the first group of detection pulses through detectors 22 of the group of channels;
control the lasers 21 of the group of channels to emit a second group of detection pulses based on the second light-emitting time sequence in the second detection orientation;
respectively receive a second group of echo pulses reflected from the object by the second group of detection pulses through the detectors 22 of the group of channels; and
determine, for one channel in the group of channels, the echo pulses with the stable positions of the one channel in the first detection orientation and the second detection orientation as the effective echo pulses of the one channel in at least one of the first detection orientation or the second detection orientation.

Based on a preferred embodiment of this disclosure, at least part of the lasers 21 of the group of channels emit light at different times in the first light-emitting time sequence and the second light-emitting time sequence.

Based on a preferred embodiment of this disclosure, an echo pulse received through a detector 22 of each channel in the group of channels includes the effective echo pulse and crosstalk generated by other channels, and the controller apparatus 23 is configured to: determine an echo pulse of the one channel that coincides with each other in the first detection orientation and the second detection orientation based on time matching degree.

Based on a preferred embodiment of this disclosure, at least one of pulses emitted by the lasers 21 of the group of channels is used as a ranging pulse, and the controller apparatus 23 is configured to: relatively shift, for one channel in the group of channels, emitting time of the ranging pulse of the one channel in the first detection orientation and the second detection orientation to coincide with each other, and compare two ranging results to select an echo pulse with a stable position.

Based on a preferred embodiment of this disclosure, ranging echo pulses reflected from the object by the ranging pulse are respectively received through the detectors 22 of the group of channels, and the controller apparatus 23 is configured to: relatively shift, for one channel in the group of channels, the emitting time of the ranging pulse of the one channel in the first detection orientation and the second detection orientation to coincide with each other, where the ranging echo pulse that is staggered in time is the echo pulse with the stable position.

Based on a preferred embodiment of this disclosure, the controller apparatus 23 is configured to: determine light-emitting time sequences of the lasers 21 of the group of channels in at least one other detection orientation after the second detection orientation, where a light-emitting time sequence in the at least one other detection orientation is different from the first light-emitting time sequence and the second light-emitting time sequence, and the controller apparatus 23 is further configured to: determine, for one channel in the group of channels, the echo pulses with the stable positions of the one channel in the first detection orientation, the second detection orientation, and the at least one other detection orientation as the effective echo pulses of the one channel in at least one of the first detection orientation or the second detection orientation.

Based on a preferred embodiment of this disclosure, a time difference between the first detection orientation and the second detection orientation and the at least one other detection orientation is within a predetermined time range.

Based on a preferred embodiment of this disclosure, the controller apparatus 23 is further configured to: determine the echo pulses with the stable positions of the one channel in the first detection orientation and the second detection orientation based on the echo pulses of at least one second channel in the first detection orientation and the second detection orientation.

Based on a preferred embodiment of this disclosure, the controller apparatus 23 is further configured to: take the echo pulses with the stable positions as the effective echo pulses of the one channel in at least one of the first detection orientation or the second detection orientation when a difference value or a ratio of amplitudes of the echo pulses with the stable positions of the one channel in the first detection orientation and the second detection orientation exceeds a predetermined threshold.

Based on a preferred embodiment of this disclosure, the controller apparatus 23 is further configured to: determine the first light-emitting time sequence and the second light-emitting time sequence in such a manner: determining the first light-emitting time sequence and the second light-emitting time sequence based on one or more of a previous ranging result of each channel in the group of channels, a previous ranging result of a channel adjacent to the channel, and obstacle information, where the first light-emitting time sequence and the second light-emitting time sequence are configured to cause the first group of echo pulses and the second group of echo pulses to be staggered in time.

Based on a preferred embodiment of this disclosure, the controller apparatus 23 is further configured to: divide a total time-of-flight window for the lasers 21 of the group of channels into at least a first interval and a second interval, where the first light-emitting time sequence is configured to cause the first group of echo pulses to be distributed in the second interval in a non-overlapping manner, and the second light-emitting time sequence is configured to cause the second group of echo pulses and the first group of echo pulses to be distributed in the second interval in the non-overlapping manner.

Based on a preferred embodiment of this disclosure, the controller apparatus 23 is further configured to: divide the second interval into k sub-intervals, where k is an integer greater than or equal to the number of channels in the group, and where the first light-emitting time sequence is configured to cause the first group of echo pulses to be distributed in the k sub-intervals in the non-overlapping manner; and the second light-emitting time sequence is configured to cause the second group of echo pulses and the first group of echo pulses to be distributed in the k sub-intervals in the non-overlapping manner.

Based on a preferred embodiment of this disclosure, the length of each sub-interval is greater than the maximum pulse width of the echo pulse.

Based on a preferred embodiment of this disclosure, the controller apparatus 23 is further configured to: configure the first light-emitting time sequence to cause the first group of echo pulses to be distributed in the k sub-intervals that are unoccupied and nearest; and the second light-emitting time sequence is configured to cause the second group of echo pulses to be distributed in the k sub-intervals that are unoccupied and nearest.

It should be finally noted that the above are merely preferred embodiments of this disclosure, and are not intended to limit this disclosure. Although this disclosure has been described in detail with reference to the foregoing embodiments, those skilled in the art can still modify the technical solutions described in the foregoing embodiments or equivalently replace some of the technical features. Any modifications, equivalents, improvements, or the like, made within the spirit and principle of this disclosure should fall within the protection scope of this disclosure.

**Claims**

1. A control method for a LiDAR, wherein the LiDAR comprises a plurality of channels, each channel comprises at least one laser and at least one detector, and the control method comprises:

   S11: dividing the plurality of channels into a plurality of groups, with all channels in each group emitting light in parallel, and determining, for one group of channels, light-emitting time sequences of lasers of the group of channels, wherein a first light-emitting time sequence used in a first detection orientation is different from a second light-emitting time sequence used in a second detection orientation;
   S12: controlling the lasers of the group of channels to emit a first group of detection pulses based on the first light-emitting time sequence in the first detection orientation;

S13: respectively receiving a first group of echo pulses reflected from an object by the first group of detection pulses through detectors of the group of channels;

S14: controlling the lasers of the group of channels to emit a second group of detection pulses based on the second light-emitting time sequence in the second detection orientation;

S15: respectively receiving a second group of echo pulses reflected from the object by the second group of detection pulses through the detectors of the group of channels; and

S16: determining, for one channel in the group of channels, an effective echo pulse of the one channel based on the first group of echo pulses and the second group of echo pulses of the one channel.

2. The control method of claim 1, wherein at least part of the lasers of the group of channels emit light at different times in the first light-emitting time sequence and the second light-emitting time sequence.

3. The control method of claim 1, wherein at the step S13 and the step S15, an echo pulse received through a detector of each channel in the group of channels comprises the effective echo pulse and crosstalk generated by other channels, and the step S16 comprises: determining an echo pulse of the one channel that coincides with each other in the first detection orientation and the second detection orientation based on time matching degree.

4. The control method of any of claims 1 to 3, wherein at the step S12 and the S14, at least one of pulses emitted by the lasers of the group of channels is used as a ranging pulse, and the step S16 comprises: relatively shifting, for one channel in the group of channels, emitting time of the ranging pulse of the one channel in the first detection orientation and the second detection orientation to coincide with each other, and comparing two ranging results to select an echo pulse with a stable position.

5. The control method of claim 4, wherein at the step S13 and the step S15, ranging echo pulses reflected from the object by ranging pulse are respectively received through the detectors of the group of channels, and the step S16 comprises: relatively shifting, for one channel in the group of channels, the emitting time of the ranging pulse of the one channel in the first detection orientation and the second detection orientation to coincide with each other, wherein the ranging echo pulse that is staggered in time is the echo pulse with the stable position.

6. The control method of any of claims 1 to 3, wherein the step S11 further comprises: determining light-emitting time sequences of the lasers of the group of channels in at least one other detection orientation after the second detection orientation, wherein a light-emitting time sequence in the at least one other detection orientation is different from the first light-emitting time sequence and the second light-emitting time sequence, and the step S16 comprises: determining, for one channel in the group of channels, the echo pulses with the stable positions of the one channel in the first detection orientation, the second detection orientation, and the at least one other detection orientation as the effective echo pulses of the one channel in at least one of the first detection orientation or the second detection orientation.

7. The control method of claim 6, wherein a time difference between the first detection orientation and the second detection orientation and the at least one other detection orientation is within a predetermined time range.

8. The control method of any of claims 1 to 3, wherein the step S16 further comprises: determining the echo pulses with the stable positions of the one channel in the first detection orientation and the second detection orientation based on the echo pulses of at least one second channel in the first detection orientation and the second detection orientation.

9. The control method of any of claims 1 to 3, wherein the step S16 comprises: taking the echo pulses with the stable positions as the effective echo pulses of the one channel in at least one of the first detection orientation or the second detection orientation when a difference value or a ratio of amplitudes of the echo pulses with the stable positions of the one channel in the first detection orientation and the second detection orientation exceeds a predetermined threshold.

10. The control method of any of claims 1 to 3, wherein the step S11 comprises:
determining the first light-emitting time sequence and the second light-emitting time sequence in such a manner: determining the first light-emitting time sequence and the second light-emitting time sequence based on one or more of a previous ranging result of each channel in the group of channels, a previous ranging result of a channel adjacent to the channel, and obstacle information, wherein the first light-emitting time sequence and the second light-emitting time sequence are configured to cause the first group of echo pulses and the second group of echo pulses to be staggered in time.

11. The control method of claim 10, further comprising: dividing a total time of flight window for the lasers of the group of channels into at least a first interval and a second interval, wherein the first light-emitting time sequence is configured to cause the first group of echo pulses to be distributed in the second interval in a non-overlapping manner; and the second light-emitting time sequence is configured to cause the second group of echo pulses and the first group of echo pulses to be distributed in the second interval in the non-overlapping manner.

12. The control method of claim 11, further comprising: dividing the second interval into k sub-intervals, wherein k is an integer greater than or equal to the number of channels in the group, and wherein the first light-emitting time sequence is configured to cause the first group of echo pulses to be distributed in the k sub-intervals in the non-overlapping manner; and the second light-emitting time sequence is configured to cause the second group of echo pulses and the first group of echo pulses to be distributed in the k sub-intervals in the non-overlapping manner.

13. The control method of claim 12, wherein the length of each sub-interval is greater than the maximum pulse width of the echo pulse.

14. The control method of claim 12, wherein the first light-emitting time sequence is configured to cause the first group of echo pulses to be distributed in the k sub-intervals that are unoccupied and nearest; and the second light-emitting time sequence is configured to cause the second group of echo pulses to be distributed in the k sub-intervals that are unoccupied and nearest.

15. A computer storage medium comprising computer executable instructions stored thereon, which, when executed by a processor, implements the control method based on any of claims 1 to 14.

16. A LiDAR, comprising:

a plurality of lasers, wherein at least one pulse emitted by each laser is used as a ranging pulse;
a plurality of detectors, wherein the plurality of lasers and the plurality of detectors form a plurality of channels, and each channel comprises at least one laser and at least one detector; and
a controller apparatus connected to the plurality of lasers and the plurality of detectors, wherein the controller apparatus is configured to:

divide the plurality of channels into a plurality of groups, with all channels in each group emitting light in parallel, and determine, for one group of channels, light-emitting time sequences of lasers of the group of channels, wherein a first light-emitting time sequence used in a first detection orientation is different from a second light-emitting time sequence used in a second detection orientation;
control the lasers of the group of channels to emit a first group of detection pulses based on the first light-emitting time sequence in the first detection orientation;
respectively receive a first group of echo pulses reflected from an object by the first group of detection pulses through detectors of the group of channels;
control the lasers of the group of channels to emit a second group of detection pulses based on the second light-emitting time sequence in the second detection orientation;
respectively receive a second group of echo pulses reflected from the object by the second group of detection pulses through the detectors of the group of channels; and
determine, for one channel in the group of channels, an effective echo pulse of the one channel based on the first group of echo pulses and the second group of echo pulses of the one channel.

17. The LiDAR of claim 16, wherein at least part of the lasers of the group of channels emit light at different times in the first light-emitting time sequence and the second light-emitting time sequence.

18. The LiDAR of claim 16, wherein an echo pulse received through a detector of each channel in the group of channels comprises the effective echo pulse and crosstalk generated by other channels, and the controller apparatus is configured to: determine an echo pulse of the one channel that coincides with each other in the first detection orientation and the second detection orientation based on time matching degree.

19. The LiDAR of any of claims 16 to 18, wherein at least one of pulses emitted by the lasers of the group of channels is used as a ranging pulse, and the controller apparatus is configured to relatively shift, for one channel in the group of channels, emitting time of the ranging pulse of the one channel in the first detection orientation and the second detection orientation to coincide with each other, and compare two ranging results to select an echo pulse with a stable position.

20. The LiDAR of claim 19, wherein ranging echo pulses reflected from the object by ranging pulses are respectively received through the detectors of the group of channels, and the controller apparatus is configured to: relatively shift, for one channel in the group of channels, the emitting time of the ranging pulse of the one channel in the first detection orientation and the second detection orientation to coincide with each other, wherein the ranging echo pulse that is staggered in time is the echo pulse with the stable position.

21. The LiDAR of any of claims 16 to 18, wherein the controller apparatus is configured to: determine light-emitting time sequences of the lasers of the group of channels in at least one other detection orientation after the second detection orientation, wherein a light-emitting time sequence in the at least one other detection orientation is different from the first light-emitting time sequence and the second light-emitting time sequence, and the controller apparatus is further configured to: determine, for one channel in the group of channels, the echo pulses with the stable positions of the one channel in the first detection orientation, the second detection orientation, and the at least one other detection orientation as the effective echo pulses of the one channel in at least one of the first detection orientation or the second detection orientation.

22. The LiDAR of claim 21, wherein a time difference between the first detection orientation and the second detection orientation and the at least one other detection orientation is within a predetermined time range.

23. The LiDAR of any of claims 16 to 18, wherein the controller apparatus is further configured to: determine the echo pulses with the stable positions of the one channel in the first detection orientation and the second detection orientation based on the echo pulses of at least one second channel in the first detection orientation and the second detection orientation.

24. The LiDAR of any of claims 16 to 18, wherein the controller apparatus is further configured to: take the echo pulses with the stable positions as the effective echo pulses of the one channel in at least one of the first detection orientation or the second detection orientation when a difference value or a ratio of amplitudes of the echo pulses with the stable positions of the one channel in the first detection orientation and the second detection orientation exceeds a predetermined threshold.

25. The LiDAR of claims 16 to 18, wherein the controller apparatus is further configured to: determine the first light-emitting time sequence and the second light-emitting time sequence in such a manner: determining the first light-emitting time sequence and the second light-emitting time sequence based on one or more of a previous ranging result of each channel in the group of channels, a previous ranging result of a channel adjacent to the channel, and obstacle information, wherein the first light-emitting time sequence and the second light-emitting time sequence are configured to cause the first group of echo pulses and the second group of echo pulses to be staggered in time.

26. The LiDAR of claim 25, wherein the controller apparatus is further configured to: divide a total time of flight window for the lasers of the group of channels into at least a first interval and a second interval, wherein the first light-emitting time sequence is configured to cause the first group of echo pulses to be distributed in the second interval in a non-overlapping manner, and the second light-emitting time sequence is configured to cause the second group of echo pulses and the first group of echo pulses to be distributed in the second interval in the non-overlapping manner.

27. The LiDAR of claim 26, wherein the controller apparatus is further configured to: divide the second interval into k sub-intervals, wherein k is an integer greater than or equal to the number of channels in the group, and wherein the first light-emitting time sequence is configured to cause the first group of echo pulses to be distributed in the k sub-intervals in the non-overlapping manner; and the second light-emitting time sequence is configured to cause the second group of echo pulses and the first group of echo pulses to be distributed in the k sub-intervals in the non-overlapping manner.

28. The LiDAR of claim 27, wherein the length of each sub-interval is greater than the maximum pulse width of the echo pulse.

29. The LiDAR of claim 28, wherein the controller apparatus is further configured such that the first light-emitting time sequence is configured to cause the first group of echo pulses to be distributed in the k sub-intervals that are unoccupied and nearest; and the second light-emitting time sequence is configured to cause the second group of echo pulses to be distributed in the k sub-intervals that are unoccupied and nearest.

**Fig. 1**

| Channel 1 | + 7° |
| Channel 6 | + 2° |
| Channel 12 | 0° |
| Channel 30 | - 6° |
| Channel 40 | - 16° |

Rotation axis

**Fig. 2a**

Rotation
axis

Rotation
direction

Horizontal angular
resolution

Second detection
orientation

First detection
orientation

**Fig. 2b**

**10** _S10_

Divide multiple channel into multiple group, with all channel in each group emitting light in parallel

_S11_

Determine, for one group of channel, light-emitting time sequence of laser of group of channels

_S12_

Control laser of group of channel to emit first group of detection pulse based on first light-emitting time sequence in first detection orientation

_S13_

Respectively receive first group of echo pulse reflected from object by first group of detection pulse through detector of group of channels

_S14_

Control laser of group of channel to emit second group of detection pulse based on second light-emitting time sequence in second detection orientation

_S15_

Respectively receive second group of echo pulse reflected from object by second group of detection pulse through detector of group of channels

_S16_

Determine, for one channel in group of channel, effective echo pulse of one channel based on first group of echo pulse and second group of echo pulse of one channel

**Fig. 3a**

**Fig. 3b**

**Fig. 4**

First detection
orientation

Emission    Reception

Channel 1

Channel 2

Channel 3

Channel 4

Second detection
orientation

Emission    Reception

**Fig. 5a**

Channel 1

Emission    Reception

First detection
orientation

Second detection
orientation

**Fig. 5b**

First detection
orientation

Emission    Reception

A

A' B' C' D'

First detection
orientation

Emission    Reception

Channel 1    A    A' B' C' D'

Channel 2    B    B'

Channel 3    C    C'

Channel 4    D    D'

Second detection
orientation

Emission    Reception

A

D' C' B' A'

B    B'

C    C'

D    D'

**Fig. 5c**

| $\theta_i$ | $\theta_{i+1}$ | $\theta_{i+2}$ |
|---|---|---|

**Fig. 6a**

| $\theta_i$ | $\theta_{i+1}$ | $\theta_{i+2}$ | $\theta_{i+3}$ | $\theta_{i+4}$ |
|---|---|---|---|---|

**Fig. 6b**

| | CH-1 | |
|---|---|---|
| $\theta_i$ | $\theta_{i+1}$ | $\theta_{i+2}$ |
| | CH-2 | |

**Fig. 6c**

| CH-1 | CH-1 | CH-1 |
|---|---|---|
| $\theta_i$ | $\theta_{i+1}$ | $\theta_{i+2}$ |
| CH-2 | CH-2 | CH-2 |

**Fig. 6d**

Channel 1

Emission          Reception

First detection orientation

Second detection orientation

**Fig. 7**

Light emission

P1
P2
P3

Code1    Code2

**Fig. 8**

Light emission                    Reception

Channel 1    Code1    Code2    Distance of object a

Channel 2    Code1    Code2    Distance of object b

**Fig. 9**

Light emission                    Reception

Pa1    Pa2    Pa3    Ea1    Ea2    Ea3

Channel1    Code1    Code2    Distance da of object a
Distance da″ of object a

Eb1'    Eb2'  Eb3'

Pb1    Pb2    Pb3    Eb1    Eb2    Eb3

Channel2    Code1    Code2    Distance of object b

**Fig. 10**

P1       P2       P3       P4

Code1    Code2    Code3

**Fig. 11a**

Emission        dmax        Reception

Code1                    Code1

$t_{start1}$     $t_{start2}$                 $t_{stop1}$     $t_{stop2}$

$W_{tof}$

**Fig. 11b**

| First interval | Second interval |
|:---:|:---:|

Total time of flight window

**Fig. 12a**

| G0 | G1 | G2 | G3 | G4 | | ··· | | Gk |
|:---:|:---:|:---:|:---:|:---:|:---:|:---:|:---:|:---:|

Total time of flight window

**Fig. 12b**

**First light-emitting time sequence at angle θ_i**

Ranging pulse

code 1    code 2

Ranging pulse

code 1    code 2

Ranging pulse

code 1    code 2

Ranging pulse

code 1    code 2

**Ranging result at angle θ_i**

Ranging echo pulse

Emission and reception of Channel 1

Ranging echo pulse

Emission and reception of Channel 2

Ranging echo pulse

Ranging echo pulse

Emission and reception of Channel 3

Ranging echo pulse

Emission and reception of Channel 4

| G0 | G1 | G2 | G3 | G4 | ... | Gk |
|---|---|---|---|---|---|---|

Total time of flight window

**Fig. 13**

20

23

21-1
⋮
21-n

21-1
⋮
21-n

L1

L1'

Object

OB

**Fig. 14**

## INTERNATIONAL SEARCH REPORT

| International application No. |
|---|
| **PCT/CN2023/073370** |

**A.     CLASSIFICATION OF SUBJECT MATTER**

G01S 7/481(2006.01)i;G01S 17/10(2020.01)i

According to International Patent Classification (IPC) or to both national classification and IPC

**B.     FIELDS SEARCHED**

Minimum documentation searched (classification system followed by classification symbols)

G01S 7，G01S 17

Documentation searched other than minimum documentation to the extent that such documents are included in the fields searched

Electronic data base consulted during the international search (name of data base and, where practicable, search terms used)

CNABS, CNTXT, WPABSC, ENTXTC, WPABS: 上海禾赛科技有限公司, 激光雷达, 发射器, 激光器, 旋转, 方向, 方位, 角度, 时序, 顺序, 不同, 调整, 改变, lidar, laser, transmit+, emit+, orientation, angle, order, sequence, differ+, chang+

**C.     DOCUMENTS CONSIDERED TO BE RELEVANT**

| Category* | Citation of document, with indication, where appropriate, of the relevant passages | Relevant to claim No. |
|---|---|---|
| X | CN 113176555 A (SHANGHAI HESAI TECHNOLOGY CO., LTD.) 27 July 2021 (2021-07-27)<br>description, paragraphs 0052-0096, and figures 2-10 | 1-29 |
| A | CN 108614254 A (BEIJING JINGWEI HIRAIN TECHNOLOGIES CO., LTD.) 02 October 2018 (2018-10-02)<br>entire document | 1-29 |
| A | CN 106443699 A (SHENZHEN FASELASE CO., LTD.) 22 February 2017 (2017-02-22)<br>entire document | 1-29 |
| A | CN 114114207 A (WUHAN WUHAN INTEGRATED PHOTOELECTRIC TECHNOLOGY CO., LTD.) 01 March 2022 (2022-03-01)<br>entire document | 1-29 |
| A | US 2018081041 A1 (APPLE INC.) 22 March 2018 (2018-03-22)<br>entire document | 1-29 |
| A | WO 2021249983 A1 (ROBERT BOSCH GMBH) 16 December 2021 (2021-12-16)<br>entire document | 1-29 |

☑ Further documents are listed in the continuation of Box C.  ☑ See patent family annex.

| | |
|---|---|
| \*     Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **06 May 2023** | **06 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/073370** |

**C.  DOCUMENTS CONSIDERED TO BE RELEVANT**

| Category* | Citation of document, with indication, where appropriate, of the relevant passages | Relevant to claim No. |
| --- | --- | --- |
| A | WO 2019110206 A1 (OSRAM GMBH) 13 June 2019 (2019-06-13)<br>entire document | 1-29 |
| A | US 2020158825 A1 (INFINEON TECHNOLOGIES AG.) 21 May 2020 (2020-05-21)<br>entire document | 1-29 |

Form PCT/ISA/210 (second sheet) (July 2022)

**INTERNATIONAL SEARCH REPORT**
Information on patent family members

International application No.

**PCT/CN2023/073370**

| Patent document cited in search report | | | Publication date (day/month/year) | Patent family member(s) | | | Publication date (day/month/year) |
|---|---|---|---|---|---|---|---|
| CN | 113176555 | A | 27 July 2021 | None | | | |
| CN | 108614254 | A | 02 October 2018 | None | | | |
| CN | 106443699 | A | 22 February 2017 | None | | | |
| CN | 114114207 | A | 01 March 2022 | None | | | |
| US | 2018081041 | A1 | 22 March 2018 | WO | 2018057081 | A1 | 29 March 2018 |
| | | | | EP | 3516417 | A1 | 31 July 2019 |
| WO | 2021249983 | A1 | 16 December 2021 | DE | 102020207272 | A1 | 16 December 2021 |
| WO | 2019110206 | A1 | 13 June 2019 | DE | 102017221797 | A1 | 06 June 2019 |
| US | 2020158825 | A1 | 21 May 2020 | KR | 20200060682 | A | 01 June 2020 |
| | | | | KR | 102280072 | B1 | 23 July 2021 |
| | | | | US | 11415671 | B2 | 16 August 2022 |
| | | | | DE | 102018129246 | A1 | 28 May 2020 |
| | | | | DE | 102018129246 | B4 | 15 October 2020 |

Form PCT/ISA/210 (patent family annex) (July 2022)